# EUROPÄISCHE PATENTANMELDUNG

(11) **EP 4 813 492 A1**
(43) Veröffentlichungstag der Anmeldung: **30.09.2026**
(21) Anmeldenummer: 25166050.2
(22) Anmeldetag: 25.03.2025
(51) Int. Cl.: B01D 5/00, E03B 3/28, B01D 53/26

(54) **KONDENSATIONSBRUNNEN ZUM KONDENSIEREN VON WASSER AUS UMGEBUNGSLUFT**

(71) Anmelder: Oberholzer-von Tolnai, Christoph, 8005 Zürich (CH)
(72) Erfinder: Oberholzer-von Tolnai, Christoph, 8005 Zürich (CH)
(74) Vertreter: EGLI-EUROPEAN PATENT ATTORNEYS

(57) **Zusammenfassung**

Der Kondensationsbrunnen (1) zum Kondensieren von Wasser aus Umgebungsluft umfasst: mehrere Netzstrukturen (2), welche jeweils eine Kondensationsfläche zum Kondensieren von Wasser aus Umgebungsluft abhängig von Temperatur und/oder Feuchtigkeit der Umgebungsluft bilden; eine zentrale Stütze (5) zum Tragen der Netzstrukturen (2); und mindestens eine Sammeleinrichtung (30) zum Sammeln des an den Netzstrukturen (2) kondensierten Wassers. Jede der Netzstrukturen (2) ist an einer an der zentralen Stütze (5) befestigten oberen Haltestruktur (10) zum Halten der Netzstrukturen (2) angeordnet, sodass sich jede der Netzstrukturen (2) unterhalb der oberen Haltestruktur (10) radial zu einer Längsachse (LA) der zentralen Stütze (5) und entlang der Längsachse (LA) der zentralen Stütze (5) erstreckt. Die Sammeleinrichtung (30) umfasst mindestens eine Aufnahmefläche (31) für kondensiertes Wasser, welche Aufnahmefläche (31) sich unterhalb der Netzstrukturen (2) erstreckt, sodass kondensiertes Wasser von mindestens einer der Netzstrukturen (2) auf die Aufnahmefläche (31) leitbar ist.

## Beschreibung

### Technisches Gebiet

Die Erfindung bezieht sich auf einen Kondensationsbrunnen zum Kondensieren von Wasser aus Umgebungsluft.

### Stand der Technik

Um in relativ trockenen Gegenden und insbesondere in Gegenden ohne Infrastruktur zur Bereitstellung von fliessendem Wasser einen Bedarf an Trinkwasser oder an Wasser zur Bewässerung von Pflanzen (z.B. landwirtschaftlich oder forstwirtschaftlich nutzbaren Pflanzen, Sträuchern und/oder Bäumen) zu decken, besteht die Möglichkeit, in der Umgebungsluft enthaltene Luftfeuchtigkeit zu nutzen und in der Umgebungsluft enthaltenen Wasserdampf zumindest teilweise in flüssiges Wasser umzuwandeln.

Die von der Umgebungsluft maximal aufnehmbare Menge einer in Form von Wasserdampf vorliegenden Feuchtigkeit (entsprechend einer relativen Luftfeuchtigkeit von 100 %) ist in der Regel von der Temperatur der Umgebungsluft abhängig. Je wärmer die Umgebungsluft ist, desto mehr Wasserdampf kann sie maximal aufnehmen. Als Taupunkt bzw. Taupunktemperatur wird gewöhnlich eine Temperatur bezeichnet, bei welcher die Umgebungsluft gerade mit Wasserdampf gesättigt ist, d.h. eine relative Luftfeuchtigkeit von 100 % aufweist. Je mehr Wasserdampf in der Umgebungsluft enthalten ist, desto höher ist demnach ihre jeweilige Taupunkttemperatur.

Ändert sich die Temperatur der mit Wasserdampf gesättigten Umgebungsluft derart, dass die Temperatur unter die jeweilige Taupunkttemperatur fällt (z.B. im Rahmen der tageszeitlichen Schwankungen der Temperatur zwischen Tag und Nacht), dann kann ein Teil des in der Umgebungsluft enthaltenen Wasserdampfes an Kondensationsflächen, welche vorzugsweise eine Temperatur unterhalb der Taupunkttemperatur der Umgebungsluft aufweisen, zu in flüssiger Form vorliegendem Wasser kondensieren.

Aus der Veröffentlichungsschrift KR 10-1369389 B1 ist ein Kondensationsbrunnen zum Kondensieren von Wasser aus Umgebungsluft bekannt, welcher eine Netzstruktur umfasst, die eine Vielzahl von Maschen aufweist und zwischen zwei vertikalen Stützen derart aufgespannt ist, dass sich die Netzstruktur senkrecht zum Boden erstreckt. Die Netzstruktur bildet eine Kondensationsfläche, sodass abhängig von Temperatur und/oder Feuchtigkeit der Umgebungsluft Wasser an der einen Netzstruktur kondensieren kann. Dieser Kondensationsbrunnen umfasst ausserdem eine unter der der Netzstruktur angeordnete Sammeleinrichtung zum Sammeln des an der Netzstruktur kondensierten Wassers.

Ein Kondensationsbrunnen der vorstehend genannten Konstruktion ist limitiert hinsichtlich der Menge Wasser, welche durch Kondensation von Wasserdampf aus der Umgebungsluft während eines Tages gewonnen werden kann.

### Zusammenfassung der Erfindung

Der vorliegenden Erfindung liegt die Aufgabe zugrunde, die genannten Nachteile zu vermeiden und einen mindestens eine Netzstruktur als Kondensationsfläche aufweisenden Kondensationsbrunnen zu schaffen, welcher es ermöglicht, mit konstruktiv einfachen und kostengünstig realisierbaren Mitteln eine relativ grosse Menge Wasser durch Kondensation von Wasserdampf aus der Umgebungsluft zu gewinnen.

Diese Aufgabe wird gelöst durch einen Kondensationsbrunnen zum Kondensieren von Wasser aus Umgebungsluft mit den Merkmalen des Patentanspruchs 1.

Der Kondensationsbrunnen umfasst mindestens eine Netzstruktur, welche eine Kondensationsfläche bildet, sodass abhängig von Temperatur und/oder Feuchtigkeit der Umgebungsluft Wasser an der mindestens einen Netzstruktur kondensieren kann; und mindestens eine Sammeleinrichtung zum Sammeln des an der mindestens einen Netzstruktur kondensierten Wassers.

Gemäss der Erfindung umfasst der Kondensationsbrunnen mehrere Netzstrukturen und eine zentrale Stütze zum Tragen der Netzstrukturen, wobei jede der Netzstrukturen an einer an der zentralen Stütze angeordneten oberen Haltestruktur zum Halten der Netzstrukturen angeordnet ist, sodass sich jede der Netzstrukturen unterhalb der oberen Haltestruktur radial zu einer Längsachse der zentralen Stütze und entlang der Längsachse der zentralen Stütze erstreckt. Des Weiteren umfasst die Sammeleinrichtung mindestens eine Aufnahmefläche für kondensiertes Wasser, welche Aufnahmefläche sich unterhalb der Netzstrukturen derart erstreckt, dass kondensiertes Wasser von mindestens einer der Netzstrukturen auf die Aufnahmefläche leitbar ist.

Die obere Haltestruktur ermöglicht im Kombination mit der zentralen Stütze, dass mehrere Netzstrukturen platzsparend an einer einzigen zentralen Stütze angeordnet und mittels dieser einen zentralen Stütze über einem Boden gehalten werden können. Dadurch, dass mehrere Netzstrukturen an der zentralen Stütze angeordnet sind, kann der Kondensationsbrunnen - abhängig von der Anzahl der Netzstrukturen - auf geringem Raum eine relativ grosse Kondensationsfläche zum Kondensieren von Wasser aus der Umgebungsluft bereitstellen und ist deshalb geeignet, eine relativ grosse Menge Wasser durch Kondensation von Wasserdampf aus der Umgebungsluft zu gewinnen. Die bereitgestellte Kondensationsfläche kann - je nach Bedarf - durch eine geeignete Wahl der Anzahl der Netzstrukturen, eine geeignete Wahl der Fläche der einzelnen Netzstrukturen und eine geeignete Wahl der Länge der zentralen Stütze beliebig vergrössert werden.

Die Konstruktion des Kondensationsbrunnens ermöglicht es, den Kondensationsbrunnen unterschiedlich zu dimensionieren, um unterschiedliche Anforderungen hinsichtlich der Menge des zu kondensierenden Wassers zu erfüllen. Ein Kondensationsbrunnen mit einer zentralen Stütze, deren Länge beispielsweise 2 Meter aufweist, kann beispielsweise als ein leicht von einer einzigen Person transportierbarer (mobiler) Kondensationsbrunnen ausgelegt werden, der geeignet ist, durch Kondensieren von Wasserdampf eine Menge von Wasser zu gewinnen, welche dem Tagesbedarf an Trinkwasser einer Person entspricht. Ein Kondensationsbrunnen mit einer zentralen Stütze, deren Länge beispielsweise 20 Meter aufweist, kann hingegen als ein stationärer Kondensationsbrunnen ausgelegt werden, der geeignet ist, durch Kondensieren von Wasserdampf eine Menge von Wasser zu gewinnen, welche dem Tagesbedarf an Trinkwasser der Bewohner eines Dorfes entspricht oder die benötigt wird, um in einer trockenen Gegend eine ausreichende Bewässerung für eine Aufforstung der Gegend oder für eine Bewässerung von landwirtschaftlich nutzbaren Pflanzen zu gewährleisten.

Der Kondensationsbrunnen kann beispielsweise acht oder mehr Netzstrukturen umfassen; der Kondensationsbrunnen kann vorzugsweise mit einer Anzahl von Netzstrukturen im Bereich von sechzehn bis vierzig Netzstrukturen realisiert sein.

Insbesondere in küstennahen Gegenden ist es möglich, dass die Temperatur der Umgebungsluft im Laufe eines Tages allein aufgrund der natürlichen Temperaturunterschiede zwischen Tag und Nacht die Taupunkttemperatur zumindest zeitweilig unterschreitet, sodass eine Kondensation des in der Umgebungsluft enthaltenen Wasserdampfes an den Netzstrukturen ohne Weiteres aufgrund der tageszeitlichen Änderungen der Lufttemperatur stattfinden kann.

Eine Ausführungsform des Kondensationsbrunnens umfasst ein Kühlaggregat, welches dazu ausgebildet ist, Umgebungsluft in einem Raumbereich oberhalb der Netzstrukturen auf eine Temperatur unterhalb der Taupunkttemperatur der Umgebungsluft zu kühlen. Die Kühlung der Umgebungsluft mittels des Kühlaggregats auf eine Temperatur unterhalb der Taupunkttemperatur ermöglicht eine Kondensation von Wasserdampf an den Netzstrukturen selbst dann, wenn die Temperatur der Umgebungsluft grösser als die Taupunkttemperatur ist. Die mittels des Kühlaggregats in einem Raumbereich oberhalb der Netzstrukturen gekühlte Umgebungsluft sinkt entlang der Netzstrukturen nach unten und kann dabei die Netzstrukturen ebenfalls auf eine Temperatur unterhalb der Taupunkttemperatur der Umgebungsluft kühlen. Dies forciert eine Kondensation von Wasserdampf an den Netzstrukturen und ermöglicht eine Steigerung der Menge des an den Netzstrukturen kondensierten Wassers. Das Kühlaggregat ermöglicht eine Verwendung des Kondensationsbrunnens zur Gewinnung von kondensiertem Wasser auch in vegetationslosen oder vegetationsarmen Wüsten, in welchen die Temperatur des Umgebungsluft selbst in der Nacht (typischerweise um 5-7°C) grösser als die Taupunktemperatur der Umgebungsluft sein kann.

In einer Weiterbildung der vorstehend genannten Ausführungsform des Kondensationsbrunnens ist das Kühlaggregat an der zentralen Stütze befestigt. Das Kühlaggregat kann am oberen Ende der zentralen Stütze angeordnet sein, beispielsweise derart, dass Umgebungsluft in einem Raumbereich unmittelbar oberhalb des oberen Endes der zentralen Stütze gekühlt werden kann. Gekühlte Luft kann in diesem Fall zentral in der Nähe der zentralen Stütze und im Wesentlichen gleichmässig verteilt durch die zwischen jeweils zwei benachbarten Netzstrukturen ausgebildeten Zwischenräume nach unten strömen und dabei die Netzstrukturen insbesondere in der Nähe der zentralen Stütze besonders intensiv auf eine Temperatur unterhalb der Taupunkttemperatur der Umgebungsluft kühlen. Die in der Nähe der zentralen Stütze nach unten sinkende Luft bewirkt, dass ungekühlte Umgebungsluft aus der Umgebung des Kondensationsbrunnens radial zur Längsachse der zentralen Stütze in die zwischen jeweils zwei benachbarten Netzstrukturen ausgebildeten Zwischenräume strömen und an den Netzstrukturen ebenfalls auf eine Temperatur unterhalb der Taupunkttemperatur gekühlt werden kann. Dies forciert zusätzlich eine Kondensation von Wasserdampf an den Netzstrukturen und ermöglicht eine weitere Steigerung der Menge des an den Netzstrukturen kondensierten Wassers.

Eine weitere Ausführungsform des Kondensationsbrunnens ist derart ausgebildet, dass die Netzstrukturen um die zentrale Stütze räumlich verteilt, vorzugsweise gleichmässig räumlich verteilt, angeordnet sind. Diese Anordnung der Netzstrukturen ermöglicht eine räumlich besonders dichte Anordnung von Kondensationsflächen in der Nähe einer einzigen zentralen Stütze und gewährleistet die Erzeugung einer grossen Menge kondensierten Wassers bei geringem Platzbedarf für den Kondensationsbrunnen.

Eine weitere Ausführungsform des Kondensationsbrunnens ist derart konzipiert, dass die obere Haltestruktur mehrere längliche obere Halteelemente umfasst, welche derart ausgebildet sind, dass jedes der länglichen oberen Haltelemente mit einem seiner Enden an der zentralen Stütze befestigt ist und jedes dieser länglichen oberen Haltelemente eine Längsachse aufweist, welche radial zur Längsachse der zentralen Stütze ausgerichtet ist oder radial zur Längsachse der zentralen Stütze ausrichtbar ist, wobei jeweils eine der Netzstrukturen an jeweils einem der mehreren länglichen oberen Halteelemente derart befestigt ist, dass sich die jeweilige eine Netzstruktur unterhalb des jeweiligen einen der mehreren länglichen oberen Halteelements entlang der Längsachse der zentralen Stütze erstreckt. Die länglichen oberen Haltelemente können beispielsweise jeweils als sich geradlinig erstreckende, stabförmige oder rohrförmige Körper ausgebildet sein und können beispielsweise aus Holz, einem Kunststoff oder einem Metall gefertigt sein. Die länglichen oberen Haltelemente ermöglichen eine einfache, stabile Anordnung der Netzstrukturen an der zentralen Stütze.

Um eine schnelle Montage des Kondensationsbrunnens zu ermöglichen, können jeweils mehrere der länglichen oberen Halteelemente ein Modul bilden, welches als Ganzes transportierbar ist und als Ganzes an der zentralen Stütze befestigt werden kann. Zur Montage aller länglichen oberen Halteelemente müssen in diesem Fall lediglich eine relativ geringe Anzahl der vorstehend genannten Module zur zentralen Stütze transportiert und jeweils als Ganzes mit einfachen Mitteln (z.B. Schrauben) an der zentralen Stütze befestigt werden.

Eine Weiterbildung der vorstehend genannten Ausführungsform des Kondensationsbrunnens ist derart konzipiert, dass jedes der länglichen oberen Haltelemente an der zentralen Stütze derart befestigt ist, dass das jeweilige längliche obere Haltelement mit Bezug auf die zentrale Stütze schwenkbar ist. Die länglichen oberen Haltelemente können beispielsweise derart zwischen einer ersten und einer zweiten Lage schwenkbar sein, dass sich jedes der oberen Halteelemente in der jeweiligen ersten Lage radial zur Längsachse der zentralen Stütze und in der jeweiligen zweiten Lage parallel zur Längsachse der zentralen Stütze erstreckt. Dies ist besonders vorteilhaft für den Fall, dass der Kondensationsbrunnen nicht stationär installiert werden soll, sondern als mobile Einrichtung konzipiert ist, welche häufig zu verschiedenen Orten transportiert werden soll. Wenn der Kondensationsbrunnen an einem Standort eingerichtet ist, die Kondensation einer möglichst grossen Menge Wasser an den Netzstrukturen zu ermöglichen, dann können die oberen Halteelemente vorzugsweise in der ersten Lage angeordnet sein, sodass sich die Netzstrukturen über eine möglichst grosse Fläche radial und axial zur Längsachse der zentralen Stütze erstrecken können. Wenn der Kondensationsbrunnen an einen anderen Standort transportiert werden soll, können die oberen Halteelemente in die jeweilige zweite Lage geschwenkt werden, sodass sich die oberen Halteelemente parallel zur Längsachse der zentralen Stütze erstrecken. Auf diese Weise wäre die räumliche Erstreckung des Kondensationsbrunnen radial zur Längsachse der zentralen Stütze reduziert. Dies kann einen Transport des Kondensationsbrunnens an einen anderen Standort vereinfachen und es beispielweise ermöglichen, dass der Kondensationsbrunnen als Ganzes zu einem anderen Standort transportiert werden kann, ohne dass die länglichen oberen Haltelemente aus Platzgründen zum Zwecke des Transports von der zentralen Stütze entfernt werden müssten.

Eine weitere Ausführungsform des Kondensationsbrunnens weist eine an der zentralen Stütze angeordnete untere Haltestruktur zum Halten der Netzstrukturen auf, welche untere Haltestruktur unterhalb der oberen Haltestruktur in einem Abstand zur oberen Haltestruktur angeordnet ist, wobei die Netzstrukturen an der unteren Haltestruktur befestigt sind und zwischen der oberen Haltestruktur und der unteren Haltestruktur derart gespannt oder derart spannbar sind, dass sich jede der Netzstrukturen in einem Raumbereich zwischen der oberen Haltestruktur und der unteren Haltestruktur radial zu der Längsachse der zentralen Stütze und entlang der Längsachse der zentralen Stütze erstreckt. Die untere Haltestruktur ermöglicht eine einfache, stabile Befestigung der Netzstrukturen derart, dass die Netzstrukturen mittels der unteren Haltestruktur und der oberen Haltestruktur ausschliesslich an der zentralen Stütze befestigt sind und sich jeweils radial und longitudinal zur Längsachse der zentralen Stütze über eine möglichst grosse Fläche erstrecken können.

Eine Weiterbildung der vorstehend genannten Ausführungsform des Kondensationsbrunnens ist derart konzipiert, dass die untere Haltestruktur mehrere längliche untere Halteelemente umfasst, welche derart ausgebildet sind, dass jedes der länglichen unteren Haltelemente mit einem seiner Enden an der zentralen Stütze befestigt ist und jedes dieser länglichen unteren Haltelemente eine Längsachse aufweist, welche radial zur Längsachse der zentralen Stütze ausgerichtet ist oder radial zur Längsachse der zentralen Stütze ausrichtbar ist, wobei jeweils eine der Netzstrukturen an jeweils einem der mehreren länglichen unteren Halteelemente derart befestigt ist, dass sich die jeweilige eine Netzstruktur oberhalb des jeweiligen einen der mehreren länglichen unteren Halteelements entlang der Längsachse der zentralen Stütze erstreckt.

Die länglichen unteren Haltelemente können beispielsweise jeweils als sich geradlinig erstreckende stabförmige oder rohrförmige Körper ausgebildet sein und beispielsweise aus Holz, einem Kunststoff oder einem Metall gefertigt sein. Die länglichen unteren Haltelemente ermöglichen eine einfache, stabile Anordnung der Netzstrukturen an der zentralen Stütze.

Um eine schnelle Montage des Kondensationsbrunnens zu ermöglichen, können jeweils mehrere der länglichen unteren Halteelemente ein Modul bilden, welches als Ganzes transportierbar ist und als Ganzes an der zentralen Stütze befestigt werden kann. Zur Montage aller länglichen unteren Halteelemente müssen in diesem Fall lediglich eine relativ geringe Anzahl der vorstehend genannten Module zur zentralen Stütze transportiert und jeweils als Ganzes mit einfachen Mitteln (z.B. Schrauben) an der zentralen Stütze befestigt werden.

Eine Weiterbildung der vorstehend genannten Ausführungsform des Kondensationsbrunnens ist derart konzipiert, dass jedes der länglichen unteren Haltelemente an der zentralen Stütze derart befestigt ist, dass das jeweilige längliche untere Haltelement mit Bezug auf die zentrale Stütze schwenkbar ist.

Die länglichen unteren Haltelemente können beispielsweise derart zwischen einer ersten und einer zweiten Lage schwenkbar sein, dass sich jedes der unteren Halteelemente in der jeweiligen ersten Lage radial zur Längsachse der zentralen Stütze und in der jeweiligen zweiten Lage parallel zur Längsachse der zentralen Stütze erstreckt. Dies ist besonders vorteilhaft für den Fall, dass der Kondensationsbrunnen nicht stationär installiert werden soll, sondern als mobile Einrichtung konzipiert ist, welche häufig zu verschiedenen Orten transportiert werden soll. Wenn der Kondensationsbrunnen an einem Standort eingerichtet ist, die Kondensation einer möglichst grossen Menge Wasser an den Netzstrukturen zu ermöglichen, dann können die unteren Halteelemente vorzugsweise in der ersten Lage angeordnet sein, sodass sich die Netzstrukturen über eine möglichst grosse Fläche radial und axial zur Längsachse der zentralen Stütze erstrecken können. Wenn der Kondensationsbrunnen an einen anderen Standort transportiert werden soll, können die unteren Halteelemente in die jeweilige zweite Lage geschwenkt werden, sodass sich die unteren Halteelemente parallel zur Längsachse der zentralen Stütze erstreckt. Auf diese Weise wäre die räumliche Erstreckung des Kondensationsbrunnens radial zur Längsachse der zentralen Stütze reduziert.

Eine Weiterbildung der vorstehend genannten Ausführungsformen des Kondensationsbrunnens ist derart konzipiert, dass die mindestens eine Aufnahmefläche für kondensiertes Wasser eine in einem der länglichen unteren Haltelemente ausgebildete Rille umfasst, welche Rille sich entlang der Längsachse des einen der länglichen unteren Haltelemente erstreckt, um entlang der Rille einen Abfluss von kondensiertem Wasser in Richtung der zentralen Achse zu ermöglichen. Ein mit einer Rille der vorstehenden genannten Art ausgestattetes unteres Halteelement ermöglicht in diesem Fall eine einfache Realisierung von zwei Funktionen: einerseits eine der Netzstrukturen an einem unteren Ende der Netzstruktur an der zentralen Stütze in einer vorgegebenen Lage zu halten und andererseits das an der Netzstruktur kondensierte Wasser in der Rille aufzunehmen und eine Weiterleitung des kondensierten Wassers in der Rille zur zentralen Stütze zu ermöglichen. Vorzugsweise können alle unteren Halteelemente des Kondensationsbrunnens mit einer Rille der vorstehenden genannten Art ausgestattet sein, um zu ermöglichen, dass das an den einzelnen Netzstrukturen kondensierte Wasser vollständig in den Rillen der jeweiligen unteren Haltelemente aufgenommen und in den Rillen in Richtung der zentralen Stütze geleitet wird. Auf diese Weise wird erreicht, dass die gesamte Menge des kondensierten Wassers zentral an der zentralen Stütze gesammelt und beispielsweise in einen Sammelbehälter für das kondensierte Wasser aufgenommen werden kann.

Eine weitere Ausführungsform des Kondensationsbrunnens ist derart konzipiert, dass die zentrale Stütze mehre Längsabschnitte aufweist, welche Längsabschnitte relativ zueinander in Richtung der Längsachse der zentralen Stütze verschiebbar sind, sodass die Erstreckung der zentrale Stütze entlang der Längsachse der zentralen Stütze variierbar ist. Die vorstehend genannte Ausbildung der zentralen Stütze ermöglicht es, die Länge der zentralen Stütze bei Bedarf - abhängig von bestimmten Parametern (z.B. dem verfügbaren Platz für die Errichtung des Kondensationsbrunnen, der räumlichen Erstreckung der verfügbaren Netzstrukturen oder den momentanen Wetterverhältnissen) geeignet auszuwählen.

Eine weitere Ausführungsform des Kondensationsbrunnens ist derart konzipiert, dass die zentrale Stütze als Teleskoprohr ausgebildet ist, welches Teleskoprohr mehrere sich entlang der Längsachse der zentralen Stütze erstreckende Rohrabschnitte umfasst, wobei mindestens einer der Rohrabschnitte zumindest über einen Teil seiner Länge in Richtung der Längsachse der zentralen Stütze in einen anderen der Rohrabschnitte schiebbar ist. Diese Ausbildung der zentralen Stütze als Teleskoprohr ermöglicht eine konstruktiv einfache Realisierung einer zentralen Stütze mit einer (abhängig von den jeweiligen Erfordernissen) veränderbaren Länge.

Eine weitere Ausführungsform des Kondensationsbrunnens ist derart konzipiert, dass mindestens eine der Netzstrukturen derart ausgebildet ist, dass die mindestens eine Netzstruktur flexibel ist und ein Abschnitt der mindestens einen Netzstruktur radial zur Längsachse der zentralen Stütze bewegbar ist, sodass eine Erstreckung der mindestens einen Netzstrukturen radial zur Längsachse der zentralen Stütze variierbar ist. Diese Ausführungsform hat den Vorteil, dass nach einer Installation des Kondensationsbrunnens die räumliche Erstreckung einer Netzstruktur radial zur Längsachse der zentralen Stütze variiert werden kann, beispielsweise in Abhängigkeit von den jeweiligen Wetterverhältnissen. Um den Kondensationsbrunnen weniger empfindlich gegen die Einwirkung starker Winde zu machen, kann es beispielsweise zweckmässig sein, verschiedene Abschnitte einer Netzstruktur in Richtung der zentralen Achse zu bewegen, sodass die Erstreckung der mindestens einen Netzstrukturen radial zur Längsachse der zentralen Stütze minimiert wird und die Netzstruktur somit eine möglichst kleine Angriffsfläche für die auf den Kondensationsbrunnen einwirkenden Winde bietet.

Eine Weiterbildung der vorstehend genannten Ausführungsform des Kondensationsbrunnens ist mit einem Elektromotor ausgestattet, welcher dazu ausgebildet ist, den Abschnitt der mindestens einen Netzstruktur radial zur Längsachse der zentralen Stütze zu bewegen. Dementsprechend kann eine elektrische Energieversorgungsvorrichtung bereitgestellt sein, welche ausgebildet ist, den Elektromotor mit elektrischer Energie zu versorgen. Des Weiteren kann eine Steuervorrichtung zur Steuerung des Elektromotors vorgesehen sein, sodass es möglich ist, die räumliche Erstreckung der Netzstrukturen radial zur Längsachse der zentralen automatisch zu variieren, z.B**.** abhängig von den momentanen Wetterverhältnissen und insbesondere von der momentanen Windgeschwindigkeit.

Eine Weiterbildung der vorstehend genannten Ausführungsformen des Kondensationsbrunnens ist derart konzipiert, dass das Kühlaggregat mit elektrischer Energie betreibbar ist und eine elektrische Energieversorgungsvorrichtung vorhanden ist, welche ausgebildet ist, das Kühlaggregat mit elektrischer Energie zu versorgen. Das Kühlaggregat kann beispielsweise als eine Wärmepumpe konzipiert sein, welche geeignet ist, der Umgebungsluft in einem vorgegebenen Raumbereich Wärme zu entziehen und diese Wärme an einem anderen Raumbereich wieder abzugeben.

Die elektrische Energieversorgungsvorrichtung zur Bereitstellung der elektrischen Energie zur Versorgung des vorstehend genannten Elektromotors und/oder des vorstehend genannten Kühlaggregats kann beispielsweise umfassen: mindestens eine Photovoltaikeinrichtung zur Umwandlung von Sonnenenergie in elektrische Energie und/oder eine Windkraftanlage zur Erzeugung von elektrischer Energie.

Bei hinreichend geringem Energiebedarf des vorstehend genannten Elektromotors und/oder des vorstehend genannten Kühlaggregats kann es zweckmässig sein, die elektrische Energieversorgungsvorrichtung (z.B. die vorstehend genannte Photovoltaikeinrichtung und/oder die Windkraftanlage) an der zentralen Stütze, beispielsweise am oberen Ende der zentralen Stütze, zu befestigen. Bei relativ grossem Energiebedarf des vorstehend genannten Elektromotors und/oder des vorstehend genannten Kühlaggregats kann es hingegen zweckmässig sein, die elektrische Energieversorgungsvorrichtung (z.B. die vorstehend genannte Photovoltaikeinrichtung und/oder die Windkraftanlage) separat von der zentralen Stütze in einer Distanz zur zentralen Stütze zu platzieren.

### Kurze Beschreibung der Zeichnungen

Weitere Einzelheiten der Erfindung und insbesondere beispielhafte Ausführungsformen der Erfindung werden im Folgenden anhand der beigefügten Zeichnungen erläutert. Es zeigen:
- Fig. 1: eine perspektivische Ansicht einer ersten Ausführungsform eines erfindungsgemässen Kondensationsbrunnens in einer Explosionsdarstellung, mit einer zentralen Stütze und einer Anordnung einer Mehrzahl von Netzstrukturen;
- Fig. 2: eine Seitenansicht des Kondensationsbrunnens gemäss Fig. 1;
- Fig. 3: den Kondensationsbrunnen gemäss Fig. 1 in einem Querschnitt entlang der Linie III-III in Fig. 2;
- Fig. 4: den Kondensationsbrunnen gemäss Fig. 1 in einem Längsschnitt entlang einer Längsachse LA der zentralen Stütze bzw. entlang der Linie IV-IV in Fig. 3;
- Fig. 5: eine Modifikation des Kondensationsbrunnens gemäss Fig. 1 in einer Seitenansicht;
- Fig. 6: eine perspektivische Ansicht der zentralen Stütze und weiterer Einzelheiten des Kondensationsbrunnens gemäss Fig. 1, insbesondere eines Teils einer oberen Haltestruktur und eines Teils einer unteren Haltestruktur für die Netzstrukturen;
- Fig. 7: das Teil der unteren Haltestruktur für die Netzstrukturen gemäss Fig. 6 in einer Draufsicht entlang der Längsachse der zentralen Stütze;
- Fig. 8A: eine Anordnung einer Netzstruktur des Kondensationsbrunnens gemäss Fig. 1;
- Fig. 8B: die Netzstruktur gemäss Fig. 8A in einer anderen Anordnung, in welcher die Erstreckung der Netzstruktur radial zur Längsachse der zentralen Stütze im Vergleich zur Darstellung gemäss Fig. 8A verändert ist;
- Fig. 9: eine zweite Ausführungsform eines erfindungsgemässen Kondensationsbrunnens, in einem Längsschnitt entlang einer Längsachse LA einer zentralen Stütze;
- Fig. 10: den Kondensationsbrunnen gemäss Fig. 9 in einem Querschnitt entlang der Linie X-X in Fig. 9.

### Beschreibung von Ausführungsformen

Für dieselben Elemente in den Figuren sind jeweils dieselben Bezugszeichen verwendet, wenn nichts anderes erwähnt ist.

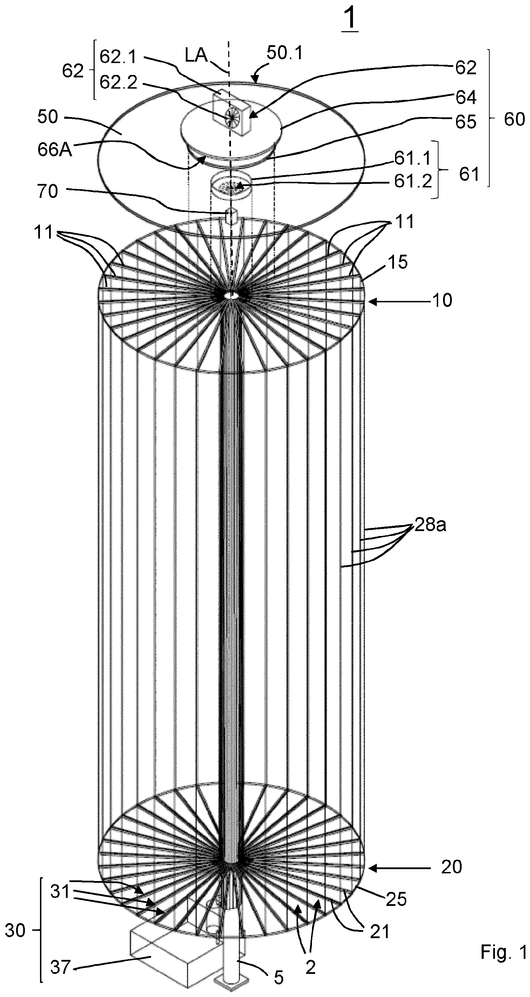

Die Fig. 1-4 zeigen einen gemäss einer ersten Ausführungsform ausgebildeten erfindungsgemässen Kondensationsbrunnen 1 zum Kondensieren von Wasser aus Umgebungsluft aus verschiedenen Perspektiven.

Der Kondensationsbrunnen 1 umfasst mehrere Netzstrukturen 2, welche jeweils eine Kondensationsfläche bilden, sodass abhängig von Temperatur und/oder Feuchtigkeit der Umgebungsluft Wasser an der jeweiligen Netzstruktur 2 kondensieren kann.

Als "Netzstruktur" soll in diesem Zusammenhang ein Flächengebilde verstanden werden, welches eine Vielzahl von durchgehenden Öffnungen aufweist, sodass das Flächengebilde für die Umgebungsluft durchgängig ist. Eine derartige Netzstruktur kann auf vielfältige Weisen realisiert sein, beispielsweise als eine perforierte Folie, welche beispielsweise aus einem Kunststoff gefertigt sein kann, oder als eine Anordnung von linienartigen, einander kreuzenden Elementen (beispielsweise Fasern, Fäden oder Bändern), welche beispielsweise aus einem Kunststoff oder einem natürlichen Material (z.B. Naturfasern oder aus einem natürlichen Material hergestellten Chemiefasern) herstellt sein können.

Im vorliegenden Beispiel gemäss Fig. 1-4 ist eine Anzahl von sechsunddreissig Netzstrukturen 2 dargestellt. Der Kondensationsbrunnen 1 kann jedoch mit beliebig vielen Netzstrukturen 2, vorzugsweise mit sechzehn bis vierzig Netzstrukturen 2, ausgestattet sein.

Der Kondensationsbrunnen 1 umfasst ausserdem eine zentrale Stütze 5 zum Tragen der Netzstrukturen 2 mit einer an der zentralen Stütze 5 angeordneten oberen Haltestruktur 10 zum Halten der Netzstrukturen 2 und eine Sammeleinrichtung 30 zum Sammeln des an mindesten einer der Netzstrukturen 2 kondensierten Wassers.

Die zentrale Stütze 5 weist im vorliegenden Beispiel eine Längsachse LA auf und ist dazu bestimmt, auf einem stabilen Grund (Boden, Fundament) errichtet zu werden, sodass sich die Längsachse LA im Wesentlichen entlang einer Vertikalen erstreckt. Im vorliegenden Beispiel gemäss Fig. 1-4 ist ein (unteres) Ende der zentralen Stütze 5 an einem Fundament F befestigt, welches in einen Boden B eingelassen ist. Der Kondensationsbrunnen 1 gemäss Fig. 1-4 ist demnach konzipiert, als eine stationäre Einrichtung betrieben zu werden.

Die zentrale Stütze 5 des Kondensationsbrunnen 1 kann beispielsweise derart realisiert sein, dass sie entlang der Längsachse LA eine Erstreckung von 20 m aufweist.

Im vorliegenden Beispiel ist die obere Haltestruktur 10 an einem oberen Ende der zentralen Stütze 5 befestigt. Jede der Netzstrukturen 2 ist an der oberen Haltestruktur 10 angeordnet, sodass sich jede der Netzstrukturen 2 unterhalb der oberen Haltestruktur 10 radial zu der Längsachse LA der zentralen Stütze 5 und entlang der Längsachse LA der zentralen Stütze 5 erstreckt.

Im vorliegenden Beispiel ist die Sammeleinrichtung 30 derart ausgebildet, dass sie mindestens eine Aufnahmefläche 31 für kondensiertes Wasser umfasst, welche Aufnahmefläche 31 sich unterhalb der Netzstrukturen 2 derart erstreckt, dass kondensiertes Wasser von mindestens einer der Netzstrukturen 2 auf die Aufnahmefläche 31 leitbar ist.

Die obere Haltestruktur 10 kann auf verschiedene Arten ausgebildet sein, um zu gewährleisten, dass alle Netzstrukturen 2 mittels der oberen Haltestruktur 10 in einer vorgegebenen Position mit Bezug auf die zentrale Stütze 5 gehalten sind. Die obere Haltestruktur 10 könnte beispielsweise als eine sich radial zur Längsachse LA der zentralen Stütze 5 erstreckende Platte ausgebildet sein, an welcher alle Netzstrukturen 2 befestigt sind.

Im vorliegenden Beispiel gemäss Fig. 1-4 ist die obere Haltestruktur 10 in einer Art Leichtbauweise derart realisiert, dass die obere Haltestruktur 10 mehrere (im vorliegenden Beispiel 36) längliche obere Halteelemente 11 (im Folgenden "obere Halteelemente 11") umfasst, welche derart ausgebildet sind, dass jedes der oberen Haltelemente 11 mit einem seiner Enden an der zentralen Stütze 5 befestigt ist und jedes dieser oberen Haltelemente 11 eine Längsachse aufweist, welche radial zur Längsachse LA der zentralen Stütze 5 ausgerichtet ist oder radial zur Längsachse LA der zentralen Stütze 5 ausrichtbar ist. Dabei ist jeweils eine der Netzstrukturen 2 jeweils einem der mehreren oberen Halteelemente 11 zugeordnet und ist an diesem jeweiligen einen der mehreren oberen Halteelement 11 derart befestigt, dass sich die jeweilige eine Netzstruktur 2 unterhalb des jeweiligen einen der mehreren oberen Halteelements 11 entlang der Längsachse LA der zentralen Stütze 5 erstreckt.

Die einzelnen oberen Halteelemente 11 können beispielsweise als stabförmige oder rohrförmige Körper oder als eine Profilschiene realisiert sein.

Wie in Fig. 1-4 angedeutet, kann der Kondensationsbrunnen 1 optional mit einer unteren Haltestruktur 20 zum Halten der Netzstrukturen 2 ausgestattet sein, welche dazu bestimmt ist, die Netzstrukturen 2 in einem Bereich unterhalb der oberen Haltestruktur 10 in einer vorgebebenen Position zu halten. Die untere Haltestruktur 20 kann zu diesem Zweck unterhalb der oberen Haltestruktur 10 in einem Abstand zur oberen Haltestruktur 10 angeordnet sein, wobei die Netzstrukturen 2 an der unteren Haltestruktur 20 befestigt sind und zwischen der oberen Haltestruktur 10 und der unteren Haltestruktur 20 derart gespannt oder derart spannbar sind, dass sich jede der Netzstrukturen 2 in einem Raumbereich zwischen der oberen Haltestruktur 10 und der unteren Haltestruktur 20 radial zu der Längsachse LA der zentralen Stütze 5 und entlang der Längsachse LA der zentralen Stütze 5 erstreckt.

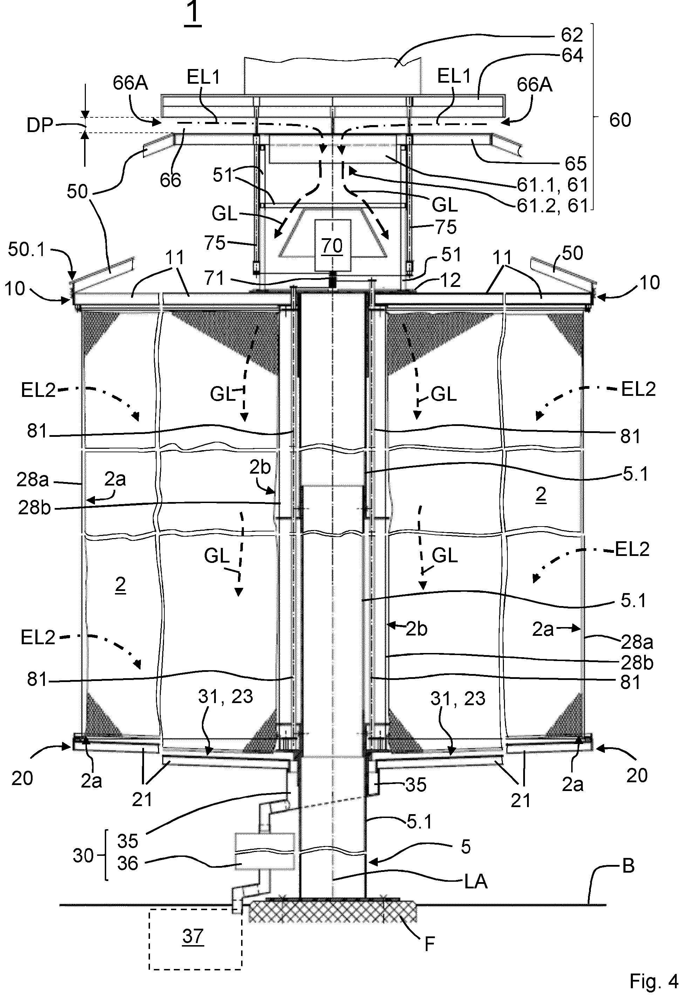

Dementsprechend ist jede der Netzstrukturen 2 mit Bezug auf die Längsachse LA der zentralen Stütze 5 derart angeordnet und erstreckt sich derart relativ zur Längsachse LA der zentralen Stütze 5, dass jede der Netzstrukturen 2 - mit Bezug auf die Längsachse LA der zentralen Stütze 5 - zwei gegenüberliegende äussere Ränder 2a bzw. 2b aufweist, welche relativ zueinander einen Abstand aufweisen (entsprechend der Erstreckung der Netzstruktur 2 radial zur Längsachse LA der zentralen Stütze 5). Im vorliegenden Beispiel sind die Bezeichnungen "äusserer Rand 2a" bzw. "äusserer Rand 2b" derart gewählt und die äusseren Ränder 2a bzw. 2b der Netzstrukturen 2 relativ zueinander derart angeordnet, dass der "äussere Rand 2a" der Netzstruktur 2 mit Bezug auf die Längsachse LA der zentralen Stütze 5 "radial aussenliegend" angeordnet ist und der "äussere Rand 2b" der Netzstruktur 2 mit Bezug auf die Längsachse LA der zentralen Stütze 5 "radial innenliegend" angeordnet ist (Fig. 4).

Die untere Haltestruktur 20 kann auf verschiedene Arten ausgebildet sein, um zu gewährleisten, dass alle Netzstrukturen 2 mittels der unteren Haltestruktur 20 in einer vorgegebenen Position mit Bezug auf die zentrale Stütze 5 gehalten sind. Die untere Haltestruktur 20 kann beispielsweise als eine sich radial zur Längsachse LA der zentralen Stütze 5 erstreckende Platte ausgebildet sein, an welcher alle Netzstrukturen 2 befestigt sind, und kann optional an der zentralen Stütze 5 befestigt sein oder alternativ separat von der zentralen Stütze angeordnet sein.

Im vorliegenden Beispiel gemäss Fig. 1-4 ist die untere Haltestruktur 20 in einer Art Leichtbauweise derart realisiert, dass die untere Haltestruktur 20 mehrere (im vorliegenden Beispiel 36) längliche untere Halteelemente 21 (im Folgenden "untere Haltelemente 21") umfasst, welche derart ausgebildet sind, dass jedes der unteren Haltelemente 21 mit einem seiner Enden an der zentralen Stütze 5 befestigt ist und jedes dieser unteren Haltelemente 21 eine Längsachse aufweist, welche radial zur Längsachse LA der zentralen Stütze 5 ausgerichtet ist oder radial zur Längsachse LA der zentralen Stütze 5 ausrichtbar ist. Dabei ist jeweils eine der Netzstrukturen 2 an jeweils einem der mehreren unteren Halteelemente 21 derart befestigt, dass sich die jeweilige eine Netzstruktur 2 oberhalb des jeweiligen einen der mehreren unteren Halteelements 21 entlang der Längsachse LA der zentralen Stütze 5 erstreckt.

Die oberen Halteelemente 11 und die unteren Halteelemente 21 können axial zur Längsachse LA der zentralen Stütze 5 derart separiert sein, dass jede der Netzstrukturen 2 zwischen jeweils einem der oberen Halteelemente 11 und jeweils einem der unteren Halteelemente 21 axial zur Längsachse LA der zentralen Stütze 5 gespannt ist.

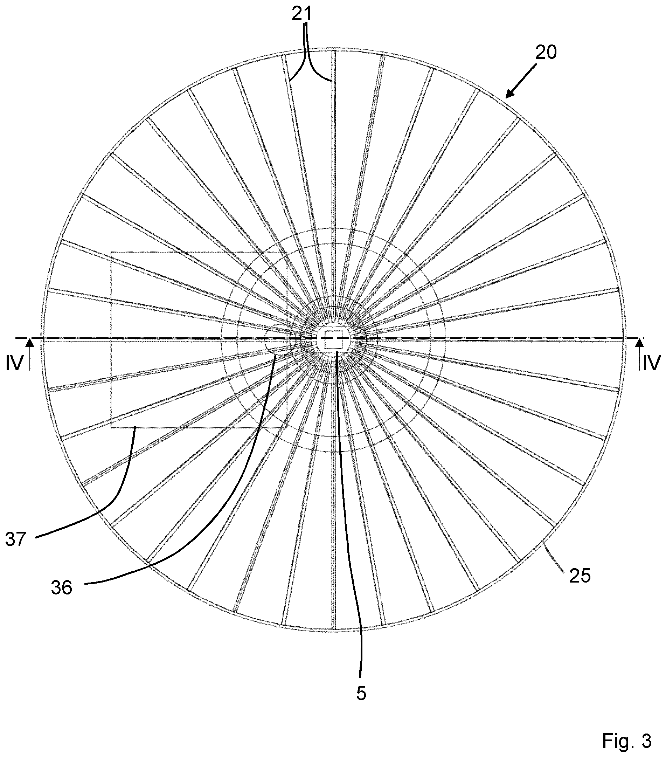

Wie aus Fig. 3 ersichtlich, sind die Netzstrukturen 2 im vorliegenden Beispiel um die zentrale Stütze 5 gleichmässig räumlich verteilt angeordnet, sodass - mit Bezug auf einen Querschnitt senkrecht zur Längsachse LA der zentralen Stütze 5 - jeweils zwei benachbarte Netzstrukturen 2 in einem Winkel von 10° relativ zueinander geneigt sind.

Optional können Mittel vorgesehen sein, um jede der Netzstrukturen 2 auch radial zur Längsachse LA der zentralen Stütze 5 zu spannen. Um eine Netzstruktur 2 radial zur Längsachse LA der zentralen Stütze 5 spannen zu können, sind im vorliegenden Beispiel (wie aus Fig. 1, 2 und 4 ersichtlich) jeweils zwei Seile 28a, 28b zwischen jeweils einem der oberen Halteelemente 11 und jeweils einem der unteren Halteelemente 21 derart gespannt, dass sich die zwei Seile 28a, 28b jeweils axial zur Längsachse LA der zentralen Stütze 5 erstrecken und radial zur Längsachse LA der zentralen Stütze 5 relativ zueinander einen Abstand aufweisen, welcher grösser oder gleich der Distanz ist, über welche sich die Netzstruktur 2 radial zur Längsachse LA der zentralen Stütze 5 erstrecken soll. Im vorliegenden Beispiel sind die beiden Seilen 28a und 28b, welche zwischen dem einen der oberen Halteelemente 11 und dem einen der unteren Halteelemente 21 gespannt sind, mit Bezug auf die Längsachse LA der zentralen Stütze 5 derart angeordnet, dass das Seil 28a mit Bezug auf die Längsachse LA der zentralen Stütze 5 "radial aussenliegend" angeordnet ist und das Seil 28b mit Bezug auf die Längsachse LA der zentralen Stütze 5 "radial innenliegend" angeordnet ist.

Eine Netzstruktur 2, welche zwischen einem der oberen Halteelemente 11 und einem der unteren Halteelemente 21 gehalten ist, kann mit den beiden Seilen 28a und 28b, welche zwischen dem einen der oberen Halteelemente 11 und dem einen der unteren Halteelemente 21 gespannt sind, derart verbunden werden, dass der äussere Rand 2a der Netzstruktur 2 an dem Seil 28a und der äussere Rand 2b der Netzstruktur 2 an dem Seil 28b befestigt ist. Durch eine geeignete Wahl des Abstands zwischen den Seilen 28a und 28b radial zur Längsachse LA der zentralen Stütze 5 wird deshalb erreicht, dass die an den Seilen 28a und 28b befestigte Netzstruktur 2 zwischen diesen Seilen 28a und 28b radial zur Längsachse LA der zentralen Stütze 5 gespannt ist.

Wie in Fig. 1-3 angedeutet, sind die oberen Halteelemente 11 der oberen Haltestruktur 10 an ihren von der zentralen Stütze 5 entfernten Enden miteinander mittels eines sich ringförmig um die Längsachse LA der zentralen Stütze 5 erstreckenden Profils 15 verbunden. Diese Massnahme verbessert die mechanische Stabilität der oberen Haltestruktur 10 bzw. der Anordnung der oberen Halteelemente 11.

Wie in Fig. 1-3 ausserdem angedeutet, sind die unteren Halteelemente 21 der unteren Haltestruktur 20 an ihren von der zentralen Stütze 5 entfernten Enden miteinander mittels eines sich ringförmig um die Längsachse LA der zentralen Stütze 5 erstreckenden Profils 25 verbunden. Diese Massnahme verbessert die mechanische Stabilität der unteren Haltestruktur 20 bzw. der Anordnung der unteren Halteelemente 21.

Mit Bezug auf die Fig. 1-5 wird im Folgenden die Funktion des Kondensationsbrunnens 1 im Hinblick auf ein Kondensieren von Wasser aus der Umgebungsluft charakterisiert.

Wenn der in den Fig. 1-4 dargestellte Kondensationsbrunnen 1 in einer mit Wasserdampf gesättigten Umgebungsluft angeordnet ist, dann kann Wasser an den einzelnen Netzstrukturen 2 und insbesondere an den jeweiligen Oberflächen der Netzstrukturen 2 kondensieren, wenn die Lufttemperatur an den jeweiligen Netzstrukturen 2 geringer als die Taupunkttemperatur der Umgebungsluft ist. Das jeweils an der Oberfläche einer der Netzstrukturen 2 kondensierte Wasser kann schliesslich aufgrund der Gravitationskraft der Erde an der Oberfläche der jeweiligen Netzstruktur 2 entlang der Längsachse LA der zentralen Stütze 5 zu einem Randbereich der Netzstruktur 2 fliessen, welcher an einem der unteren Halteelemente 21 der unteren Haltestruktur 20 befestigt ist.

Wie in den Fig. 1-4 angedeutet, weist jedes der unteren Halteelemente 21 an einer Seite, welche der an dem jeweiligen unteren Halteelement 21 befestigten Netzstruktur 2 gegenüberliegt, eine Aufnahmefläche 31 für das kondensierte Wasser auf, welches an der an dem jeweiligen unteren Halteelement 21 befestigten Netzstruktur 2 kondensiert ist. Die Aufnahmefläche 31 eines der untere Halteelement 21 ist dabei unterhalb der an dem jeweiligen unteren Halteelement 21 befestigten Netzstruktur 2 derart angeordnet, dass das an der Netzstruktur 2 kondensierte Wasser auf die Aufnahmefläche 31 des jeweiligen unteren Halteelements 21 tropfen bzw. fliessen kann und demensprechend auf die Aufnahmefläche 31 des jeweiligen unteren Halteelements 21 geleitet wird.

Die Aufnahmeflächen 31 der unteren Halteelemente 21 sind dabei mit Bezug auf die Längsachse LA der zentralen Stütze 5 derart geneigt, dass das von den Netzstrukturen 2 auf die Aufnahmeflächen 31 der unteren Haltelemente 21 geleitete kondensierte Wasser in Richtung der zentralen Stütze 5 abfliessen kann.

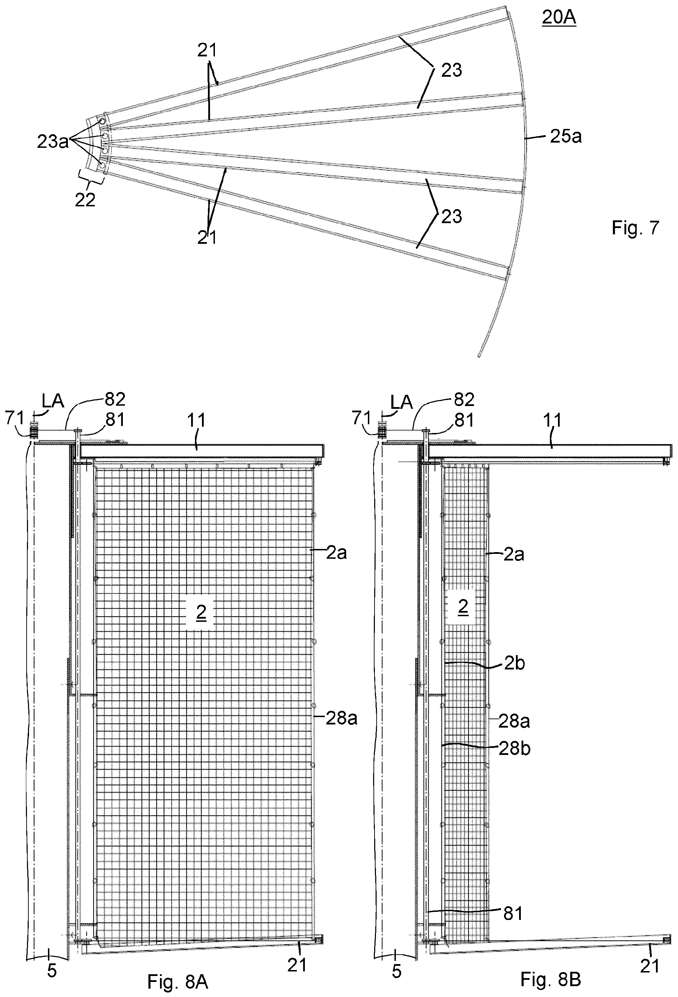

Wie in Fig. 4 und 7 angedeutet, können die Aufnahmeflächen 31 der unteren Halteelemente 21 derart ausgebildet sein, dass jede Aufnahmefläche 31 eine in dem jeweiligen unteren Haltelement 21 ausgebildete Rille 23 umfasst, welche Rille 23 sich entlang der Längsachse des jeweiligen unteren Haltelements 21 erstreckt und ausgebildet ist, einen Abfluss von kondensiertem Wasser entlang der Rille 23 in Richtung der zentralen Stütze 5 zu ermöglichen. Zu diesem Zweck sind die Rillen 23 radial zur Längsachse LA der zentralen Stütze 5 zur zentralen Stütze 5 hin geneigt (Fig. 4).

Das über die Aufnahmeflächen 31 der unteren Haltelemente 21 in Richtung der zentralen Stütze 5 abfliessende kondensierte Wasser kann an einer zentralen Stelle in der zentralen Stütze 5 oder an der zentralen Stütze 5 gesammelt und/oder gespeichert werden. Im vorliegenden Beispiel ist zu diesem Zweck vorgesehen, dass die Sammeleinrichtung 30 eine Aufnahmeschale 35 zur Aufnahme von kondensiertem Wasser von den Rillen 23 der unteren Halteelemente 21 und mindestens einen Wassertank 37 zum Speichern des von der Aufnahmeschale 35 aufgenommenen kondensierten Wassers umfasst (Fig. 1, 2, 4 und 7) .

Wie in Fig. 1, 2, 4 und 7 angedeutet, ist die Aufnahmeschale 35 als ein Körper ausgebildet, welcher unterhalb der unteren Halteelemente 21 der unteren Haltestruktur 20 an der zentralen Stütze 5 derart angeordnet werden kann, dass er sich ringförmig um die zentrale Stütze 5 erstreckt und mit den Aufnahmeflächen 31 bzw. den Rillen 23 der unteren Haltelemente 21 in einer Fluidverbindung steht, über welche kondensiertes Wasser von den Aufnahmeflächen 31 bzw. den Rillen 23 in die Aufnahmeschale 35 fliessen kann.

Der mindestens eine Wassertank 37 ist im vorliegenden Beispiel derart angeordnet, dass er mit der Aufnahmeschale 35 in einer Fluidverbindung steht, sodass von der Aufnahmeschale 35 aufgenommenes kondensiertes Wasser in den mindestens einen Wassertank 37 fliessen kann.

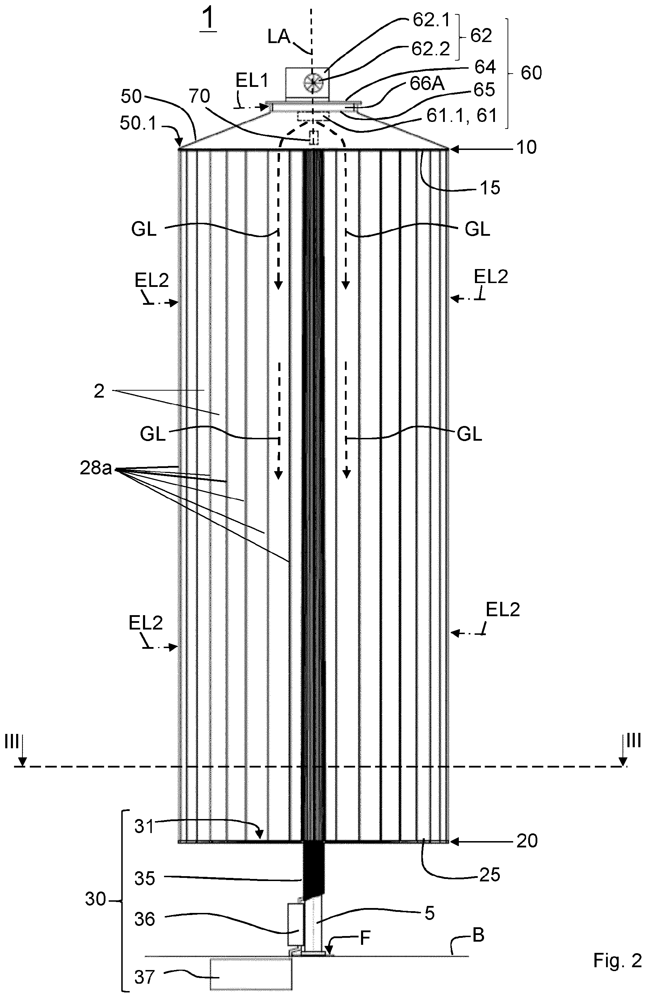

Wie in Fig. 2 und 4 angedeutet, kann (optional) in die Fluidverbindung zwischen der Aufnahmeschale 35 und dem Wassertank 37 ein Wasserfilter 36 integriert werden, welcher geeignet ist, das kondensierte Wasser zu reinigen.

Die in den Figuren dargestellte Sammeleinrichtung 30 kann auf vielfältige Weise modifiziert werden. Die Aufnahmeschale 35 kann beispielsweise einteilig ausgebildet sein oder alternativ aus mehreren Teilen zusammengesetzt sein, um beispielsweise eine Montage der Aufnahmeschale 35 an der zentralen Stütze 5 zu vereinfachen. Anstelle einer Installation eines einzigen Wassertanks 37 kann auch eine Installation mehrerer Wassertanks 37 realisiert werden.

Um zu erreichen, dass der Kondensationsbrunnen 1 auch dann zum Kondensieren von Wasser aus der Umgebungsluft geeignet ist, wenn die Temperatur der Umgebungsluft grösser als die Taupunktemperatur der Umgebungsluft ist, kann der Kondensationsbrunnen 1 optional mit Mitteln ausgestatten werden, welche ein Kühlen der Luft zumindest in Raumbereichen ermöglichen, welche an die jeweiligen Netzstrukturen 2 angrenzen.

Entsprechende (optionale) Mittel, welche ein Kühlen der Luft auf Temperaturen unterhalb der Taupunkttemperatur ermöglichen sollen, werden im Folgenden mit Bezug auf Fig. 1, 2 und 4 erläutert.

Wie in Fig. 1, 2 und 4 dargestellt, weist der Kondensationsbrunnen 1 eine obere Abdeckung 50 auf, welche an der zentralen Stütze 5 oberhalb der oberen Haltestruktur 10 angeordnet ist und sich im Wesentlichen radial zur Längsachse LA der zentralen Stütze 5 erstreckt, sodass die obere Abdeckung 50 einen (mit Bezug auf die Längsachse LA der zentralen Stütze 5) äusseren Rand 50.1 aufweist) und alle Netzstrukturen 2 des Kondensationsbrunnens 1 in einem Raumbereich angeordnet sind, welcher einer Projektion der oberen Abdeckung axial zur Längsachse LA der zentralen Stütze 5 in Richtung der Netzstrukturen 2 entspricht. Die obere Abdeckung 50 überdeckt somit den gesamten Raumbereich, durch welchen sich die Netzstrukturen 2 des Kondensationsbrunnens 1 radial zur Längsachse LA der zentralen Stütze 5 erstrecken.

Die obere Abdeckung 50 ist vorzugsweise als eine für die Umgebungsluft undurchlässige Struktur ausgebildet. Auf diese Weise kann vermieden werden, dass Umgebungsluft aus einem Raumbereich oberhalb der oberen Abdeckung 50 ungehindert axial zur Längsachse LA der zentralen Stütze 5 entlang der Oberflächen der Netzstrukturen 2 strömen kann.

Wie aus Fig. 2 und 4 ersichtlich, ist die obere Abdeckung 50 an einem oberen Ende der zentralen Stütze 5 befestigt und ist zu diesem Zweck auf einer Tragstruktur 51 zum Tragen der oberen Abdeckung 50 angeordnet, welche Tragstruktur 51 am oberen Ende der zentralen Stütze 5 befestigt ist.

Wie aus Fig. 1, 2 und 4 ersichtlich, ist in einem zentralen Bereich der oberen Abdeckung 50 ein Kühlaggregat 60 angeordnet, welches dazu dient, Umgebungsluft aus einem Raumbereich oberhalb der oberen Abdeckung 50 aufzunehmen, auf eine Temperatur unterhalb der Taupunkttemperatur der Umgebungsluft zu kühlen und die derart gekühlte Luft in den Raumbereich unterhalb der oberen Abdeckung 50 strömen zu lassen, in welchem die Netzstrukturen 2 des Kondensationsbrunnens 1 angeordnet sind. Die derart gekühlte Luft ermöglicht eine Kondensation von Wasser an den Netzstrukturen 2.

Das Kühlaggregat 60 kann beispielsweise als eine mit elektrischer Energie betreibbare Wärmepumpe ausgebildet sein. Im Falle des in Fig. 1-4 dargestellten Kondensationsbrunnens 1 ist das Kühlaggregat 60 beispielhaft als eine Kompressionswärmepumpe konzipiert, welche einen Kältemittel-Kreislauf aufweist, in welchem ein Kältemittel derart zirkulieren kann, dass das Kältemittel in verschiedenen Bereichen des Kältemittel-Kreislaufs die Aggregatzustände "gasförmig" und "flüssig" abwechselnd (zyklisch nacheinander) annehmen kann. Integrale Bestandteile dieses Kreislaufs sind insbesondere ein Verdampfer 61 und ein Kondensator 62, wobei der Verdampfer 61 und der Kondensator 62 im Kältemittel-Kreislauf nacheinander angeordnet sind, sodass das Kältemittel zyklisch wiederkehrend den Verdampfer 61 und den Kondensator 62 durchströmen kann und dabei im Verdampfer 61 zunächst vom Aggregatzustand "flüssig" in den Aggregatzustand "gasförmig" und anschliessend im Kondensator 62 vom Aggregatzustand "gasförmig" in den Aggregatzustand "flüssig" überführt werden kann.

Der Verdampfer 61 des Kühlaggregats 60 ist ausgebildet, ein Verdampfen des im flüssigen Aggregatzustand vorliegenden Kältemittels zu ermöglichen und zu diesem Zweck die zum Verdampfen des (flüssigen) Kältemittels erforderliche Verdampfungswärme der Umgebungsluft in der Nähe des Verdampfers 61 zu entziehen. Auf diese Weise ist der Verdampfer 61 in der Lage, im Betrieb des Kühlaggregats 60 Umgebungsluft zu kühlen und gekühlte Umgebungsluft in Form eines Luftstroms abzugeben. Im vorliegenden Beispiel ist der Verdampfer 61 eingerichtet, einen Luftstrom gekühlter Umgebungsluft durch Öffnungen 61.2 abzugeben, welche in einem Gehäuse 61.1 des Verdampfers 61 ausgebildet sind. Wie in Fig. 1, 2 und 4 angedeutet, ist der Verdampfer 61 am oberen Ende der zentralen Achse 5 derart angeordnet, dass ein durch die Öffnungen 61.2 des Gehäuse 61.1 abgegebener Luftstrom aus gekühlter Umgebungsluft in den sich unterhalb der oberen Abdeckung 50 erstreckenden Raumbereich gerichtet ist und entlang der Längsachse LA der zentralen Stütze 5 propagieren kann.

Der Kondensator 62 des Kühlaggregats 60 ist ausgebildet, das im Verdampfer 61 in den Aggregatzustand "gasförmig" überführte Kältemittel wieder zu kondensieren, sodass das Kältemittel im Kondensator wieder den Aggregatzustand "flüssig" annehmen kann. Zu diesem Zweck umfasst der Kondensator 62 einen (in den Figuren nicht dargestellten) Verdichter, welcher dazu bestimmt ist, das im Kältemittel-Kreislauf im gasförmigen Zustand zirkulierende Kältemittel zunächst zu verdichten, und anschliessend in einem dem Verdichter nachgeordneten (in den Figuren nicht dargestellten) Wärmetauscher wieder derart abzukühlen, dass das Kältemittel wieder kondensiert und in den flüssigen Zustand übergeht. Der Wärmetauscher ist hierbei eingerichtet, die im Kältemittel-Kreislauf beim Kondensieren des Kältemittels frei werdende Kondensationswärme aufzunehmen und an die Umgebungsluft in der Nähe des Kondensators 62 abzugeben.

Im vorliegenden Beispiel ist der Kondensator 62 eingerichtet, im Wärmetauscher des Kondensators 62 erwärmte Umgebungsluft in Form eines Luftstroms durch Öffnungen 62.2 abzugeben, welche in einem Gehäuse 62.1 des Kondensators 62 ausgebildet sind. Wie in Fig. 1, 2 und 4 angedeutet, ist der Kondensator 62 an der oberen Abdeckung 50 derart angeordnet, dass die im Wärmetauscher des Kondensators 62 erwärmte Umgebungsluft durch die Öffnungen 62.2 des Gehäuses 62.1 in einen an die obere Abdeckung 50 angrenzenden Raumbereich abgegeben wird, welcher sich oberhalb der oberen Abdeckung 50 in Richtung der Längsachse LA der zentralen Stütze 5 erstreckt.

Um die Kühlwirkung des Kühlaggregats 60 im Hinblick auf die Kühlung der Umgebungsluft in einem Raumbereich unterhalb der oberen Abdeckung 50 zu optimieren und den Bedarf an elektrischen Energie zum Betreiben des Kühlaggregats 60 möglichst weitgehend zu minimieren, sind im vorliegenden Beispiel Massnamen vorgesehen, welche bezwecken, den Raumbereich, in welchen während eines Betriebs des Kühlaggregats 60 ein Luftstrom gekühlter Umgebungsluft durch die Öffnungen 61.2 des Gehäuses 61.1 des Verdampfers 61 injizierbar ist, von jenem Raumbereich räumlich zu separieren und/oder wärmetechnisch zu isolieren, in welchen während eines Betriebs des Kühlaggregats 60 die im Wärmetauscher des Kondensators 62 erwärmte Umgebungsluft durch die Öffnungen 62.2 des Gehäuses 62.1 während eines Betriebs des Kühlaggregats 60 ausgegeben wird.

Entsprechende Massnahmen zur räumlichen Separierung und/oder wärmetechnischen Isolierung der vom Verdampfer 61 abgegebenen gekühlten Umgebungsluft und der vom Kondensator 62 abgegebenen erwärmten Umgebungsluft werden im Folgenden mit Bezug auf Fig. 1, 2 und 4 erläutert.

Wie in Fig. 1, 2 und 4 angedeutet, ist das Kühlaggregat 60 im vorliegenden Beispiel derart konzipiert, dass der Verdampfer 61 und der Kondensator 62 in Richtung der Längsachse LA der zentralen Stütze 5 räumlich versetzt übereinander angeordnet sind. Um eine räumliche Trennung zwischen dem Verdampfer 61 und dem Kondensator 62 zu realisieren, weist das Kühlaggregat 60 eine Anordnung von zwei ebenen (im vorliegenden Beispiel kreisförmig ausgebildeten) Platten 64 und 65 auf, welche sich parallel zueinander jeweils radial zur Längsachse LA der zentralen Stütze 5 erstrecken und derart in einem Abstand zueinander angeordnet sind, dass zwischen den Platten 64 und 65 ein Zwischenraum 66 ausgebildet ist, welcher in Richtung der Längsachse LA der zentralen Stütze 5 eine Erstreckung DP aufweist, wobei die Platte 64 oberhalb der Platte 65 angeordnet ist.

Die Platte 65 ist an ihrer Peripherie mit der oberen Abdeckung 50 fest verbunden und weist in einem zentralen Bereich eine sich entlang der Längsachse LA der zentralen Stütze 5 erstreckende, durchgehende Öffnung auf, in welcher der Verdampfer 61 derart angeordnet ist, dass die Platte 65 das Gehäuse 61.1 des Verdampfers 61 dicht umschliesst.

Die Platte 64 dient dazu, den Kondensator 62 zu tragen und in einer vorgegebenen Position mit Bezug auf die zentralen Stütze 5 zu halten. Wie aus Fig. 1, 2 und 4 ersichtlich, ist der Kondensator 62 auf einer von dem Verdampfer 61 entfernten (abgewandten) Seite der Platte 64 angeordnet, sodass die Platte 64 den Kondensator 62 von dem Verdampfer 61 und dem zwischen den Platten 64 und 65 ausgebildeten Zwischenraum 66 separiert.

Wie aus Fig. 1, 2 und 4 ersichtlich, erstreckt sich der Zwischenraum 66 zwischen den Platten 64 und 65 radial zur Längsachse LA der zentralen Stütze 5 derart, dass der Zwischenraum 66 an der radial äusseren Peripherie der Platte 65 bzw. an der radial äusseren Peripherie der Platte 64 offen ist und dementsprechend eine sich ringförmig um die Längsachse LA der zentralen Stütze 5 erstreckende Öffnung 66A aufweist, welche den Zwischenraum 66 radial aussen begrenzt und durch welche Umgebungsluft von aussen radial zur Längsachse LA der zentralen Stütze 5 in den Zwischenraum 66 strömen kann. Die Öffnung 66A bildet im vorliegenden Beispiel eine "Eingangsöffnung", durch welche (ungekühlte und mittels des Kühlaggregats 60 zu kühlende) Umgebungsluft radial zur Längsachse LA der zentralen Stütze 5 in das Kühlaggregat 60 eintreten und insbesondere radial zur Längsachse LA der zentralen Stütze 5 dem Verdampfer 61 des Kühlaggregats 60 zugeführt werden kann.

Zur Veranschaulichung dieses Sachverhalts sind in Fig. 2 und 4 mit dem Bezugszeichen "EL1" versehene Pfeile gezeigt, welche jeweils einen Luftstrom ungekühlter Umgebungsluft repräsentieren, welcher radial zur Längsachse LA der zentralen Stütze 5 durch die Öffnung 66A in den Zwischenraum 66 gerichtet ist.

Wie in Fig. 2 und 4 angedeutet, ist das Kühlaggregat 60 derart ausgebildet, dass im Betrieb des Kühlaggregats 60 ein Luftstrom EL1 ungekühlter Umgebungsluft durch die Öffnung 66A in den sich zwischen den Platten 64 und 65 erstreckenden Zwischenraum 66 dem Verdampfer 61 des Kühlaggregat 60 zugeführt wird (gegebenenfalls mit Hilfe eines in den Figuren nicht dargestellten Ventilators). Der Verdampfer 61 ist derart konzipiert, dass die dem Verdampfer 61 durch den Zwischenraum 66 zugeführte Umgebungsluft im Verdampfer 61 gekühlt wird und ein Luftstrom gekühlter Luft durch die Öffnungen 61.2 im Gehäuse 61.1 des Verdampfers 61 ausgegeben wird.

Zur Veranschaulichung dieses Sachverhalts sind in Fig. 2 und 4 mit dem Bezugszeichen "GL" versehene Pfeile gezeigt, welche einen vom Verdampfer 61 generierten Luftstrom gekühlter Luft charakterisieren.

Um den Energieverbrauch des Kühlaggregats 60 möglichst gering zu halten, ist es zweckmässig, die Platte 64 aus einem (wärmeisolierenden) Material mit geringer Wärmeleitfähigkeit herzustellen. Dadurch wird erreicht, dass die erwärmte Umgebungsluft, welche während eines Betriebs des Kühlaggregats 60 vom Kondensator 62 des Kühlaggregats 60 durch die Öffnungen 62.2 des Gehäuses 62.1 des Kondensators 62 abgegeben wird, mittels der Platte 64 vom Zwischenraum 66 thermisch isoliert ist. Auf diese Weise wird verhindert, dass die vom Kondensator 62 abgegebene erwärmte Umgebungsluft die (entsprechend dem Luftstrom EL1) durch den Zwischenraum 66 strömende Umgebungsluft aufheizen kann und eine unerwünschte Erhöhung der Temperatur der durch den Zwischenraum 66 strömende Umgebungsluft verursachen könnte.

Zur weiteren Optimierung des Energieverbrauchs des Kühlaggregats 60 ist vorgesehen, dass die Erstreckung DP des Zwischenraums 66 in der Richtung der Längsachse LA der zentralen Stütze 5 variiert werden kann, um eine Regulierung des Luftstroms EL1 zu ermöglichen. Zu diesem Zweck ist die Platte 64 derart angeordnet, dass ihre Position relativ zur Platte 65 in der Richtung der Längsachse LA der zentralen Stütze 5 veränderbar ist. Wie in Fig. 4 angedeutet, ist die Platte 64 auf eine an der Tragstruktur 51 befestigte Positioniervorrichtung 75 zur Positionierung der Platte 64 gestützt. Die Positioniervorrichtung 75 umfasst einen konventionellen (in den Figuren nicht im Detail erkennbaren) Verstellmechanismus, welcher mit der Platte 64 verbunden ist und mittels eines in der Fig. 4 dargestellten Elektromotors 70 antreibbar ist, um durch eine entsprechende Ansteuerung des Elektromotors 70 eine lineare Bewegung der Platte 64 relativ zur Tragstruktur 51 entlang der Längsachse LA der zentralen Stütze 5 und somit eine Änderung der Erstreckung DP des Zwischenraums 66 zu ermöglichen. Wie in Fig. 4 angedeutet, ist der vorstehend genannte Verstellmechanismus der Positioniervorrichtung 75 zu diesem Zweck beispielsweise mittels eines Riemens an eine Antriebswelle 71 des Elektromotors 70 gekoppelt.

Wie in Fig. 1, 2 und 4 angedeutet, ist der Verdampfer 61 am oberen Ende der zentralen Achse 5 derart angeordnet, dass ein durch die Öffnungen 61.2 des Gehäuse 61.1 abgegebener Luftstrom GL aus gekühlter Umgebungsluft in den sich unterhalb der oberen Abdeckung 50 erstreckenden Raumbereich gerichtet ist und entlang der Längsachse LA der zentralen Stütze 5 propagieren kann. Die aus den Öffnungen 61.2 des Gehäuses 61.1 abgegebene gekühlte Luft kann allein aufgrund ihres spezifischen Gewichts entlang der zentralen Stütze 5 nach unten sinken. Um den Luftstrom GL aus gekühlter Umgebungsluft zu verstärken, kann das Kühlaggregat 60 beispielsweise mit einem Ventilator versehen sein, welcher für einen erhöhten Durchfluss von gekühlter Umgebungsluft durch die Öffnungen 61.2 des Gehäuse 61.1 und dementsprechend für einen verstärkten Luftstrom GL aus gekühlter Umgebungsluft entlang der Längsachse LA der zentralen Stütze 5 sorgt.

Das Kühlaggregat 60 kann ausgebildet sein, Umgebungsluft in einem Raumbereich oberhalb der Netzstrukturen 2 auf eine Temperatur unterhalb der Taupunkttemperatur der Umgebungsluft zu kühlen. Die Kühlung der Umgebungsluft mittels des Kühlaggregats 60 auf eine Temperatur unterhalb der Taupunkttemperatur ermöglicht eine Kondensation von Wasserdampf an den Netzstrukturen 2 selbst dann, wenn die Temperatur der Umgebungsluft grösser als die Taupunkttemperatur ist. Die mittels des Kühlaggregats 60 gekühlte Umgebungsluft strömt entlang der Netzstrukturen 2 nach unten und kann dabei die Netzstrukturen 2 ebenfalls auf eine Temperatur unterhalb der Taupunkttemperatur der Umgebungsluft kühlen. Dies forciert eine Kondensation von Wasserdampf an den Netzstrukturen 2 und ermöglicht eine Steigerung der Menge des an den Netzstrukturen 2 kondensierten Wassers.

Gekühlte Luft kann in diesem Fall zentral in der Nähe der zentralen Stütze 2 und im Wesentlichen gleichmässig verteilt durch die zwischen jeweils zwei benachbarten Netzstrukturen 2 ausgebildeten Zwischenräume nach unten strömen und dabei die Netzstrukturen 2 insbesondere in der Nähe der zentralen Stütze 5 besonders intensiv auf eine Temperatur unterhalb der Taupunkttemperatur der Umgebungsluft kühlen.

Die in der Nähe der zentralen Stütze 5 nach unten strömende Luft bewirkt, dass ungekühlte Umgebungsluft aus der Umgebung des Kondensationsbrunnens 1 radial zur Längsachse LA der zentralen Stütze 5 in die zwischen jeweils zwei benachbarten Netzstrukturen 2 ausgebildeten Zwischenräume strömen und an den Netzstrukturen 2 ebenfalls auf eine Temperatur unterhalb der Taupunkttemperatur gekühlt werden kann. Dies kann zusätzlich eine Kondensation von Wasserdampf an den Netzstrukturen 2 forcieren und eine weitere Steigerung der Menge des an den Netzstrukturen 2 kondensierten Wassers ermöglichen.

Zur Veranschaulichung dieses Sachverhalts sind in Fig. 2 und 4 mit dem Bezugszeichen "EL2" versehene Pfeile gezeigt, welche jeweils einen Luft-Zustrom aus ungekühlter Umgebungsluft repräsentieren, welcher radial zur Längsachse LA der zentralen Stütze 5 in den sich unterhalb der oberen Abdeckung 50 erstreckenden Raumbereich gerichtet ist.

Es sei darauf hingewiesen, dass die in Fig. 2 und 4 dargestellten Luft-Zuströme EL2 aus ungekühlter Umgebungsluft im vorliegenden Beispiel im Betrieb des Kühlaggregats 60 insbesondere durch den vom Kühlaggregats 60 erzeugten Luftstrom GL aus gekühlter Umgebungsluft induziert sein können. Da die Luft-Zuströme EL2 einem Transport von Umgebungsluft entsprechen, welche eine höhere Temperatur aufweist als die Temperatur der im Luftstrom GL transportierten gekühlten Umgebungsluft, haben die Luft-Zuströme EL2 aus ungekühlter Umgebungsluft auch ein Potential, den kühlenden Effekt des vom Kühlaggregats 60 erzeugten Luftstroms GL aus gekühlter Umgebungsluft in dem sich unterhalb der oberen Abdeckung 50 erstreckenden Raumbereich zumindest teilweise zu kompensieren.

Des Weiteren sei darauf hingewiesen, dass - falls der Kondensationsbrunnen 1 in einer Gegend errichtet sein sollte, in welcher der Kondensationsbrunnen 1 einem quer zur Längsachse LA der zentralen Stütze 5 gerichteten Seitenwind ausgesetzt ist - ein derartiger Seitenwind ebenfalls zu den in Fig. 2 und 4 dargestellten Luft-Zuströmen EL2 aus ungekühlter Umgebungsluft beitragen kann und dementsprechend das Potential hat, dem kühlenden Effekt des vom Kühlaggregats 60 erzeugten Luftstroms GL aus gekühlter Umgebungsluft in dem sich unterhalb der oberen Abdeckung 50 erstreckenden Raumbereich zusätzlich entgegenzuwirken.

Zur Optimierung des kühlenden Effekts des vom Kühlaggregat 60 erzeugten Luftstroms GL aus gekühlter Umgebungsluft können deshalb Massnahmen zweckmässig sein, welche einen Zustrom von ungekühlter Umgebungsluft (entsprechend den in Fig. 2 und 4 dargestellten Luft-Zuströmen EL2 aus ungekühlter Umgebungsluft) in den sich unterhalb der oberen Abdeckung 50 erstreckenden Raumbereich zumindest in bestimmten Bereichen des Kondensationsbrunnens 1 reduzieren

Als eine (optionale) Massnahme der vorstehend genannten Art kann im Falle des Kondensationsbrunnens 1 die Form der oberen Abdeckung 50 und die Position des Kühlaggregats 60 bzw. die Position der Öffnungen 61.2 des Gehäuses 61.1 des Verdampfers 61 mit Bezug auf den äusseren Rand 50.1 der oberen Abdeckung 50 in Betracht gezogen werden.

Diesbezüglich kann als relevant angesehen werden, dass die obere Abdeckung 50 im Falle des Kondensationsbrunnens 1 gemäss Fig. 1-4 nicht als eine ebene, sich radial zur Längsachse LA der zentralen Stütze 5 erstreckende Fläche ausgebildet ist. Vielmehr hat die obere Abdeckung 50 die Form eines Kegels bzw. Kegelstumpfes, sodass ein zentraler Bereich der oberen Abdeckung 50 mit Bezug auf den äusseren Rand 50.1 der Abdeckung 50 axial zur Längsachse LA der zentralen Stütze 5 versetzt ist, und zwar insbesondere derart, dass der zentrale Bereich der oberen Abdeckung 50 in der Nähe der Längsachse LA der zentralen Stütze 5 um eine vorgegebene Distanz oberhalb des äusseren Rands 50.1 der oberen Abdeckung 50 angeordnet ist. Demensprechend ist im vorliegenden Beispiel die Position des Kühlaggregats 60 derart gewählt, dass die Öffnungen 61.2 des Gehäuses 61.1 des Verdampfers 61 in der Nähe der Längsachse LA der zentralen Stütze 5 ebenfalls oberhalb des äusseren Randes 50.1 der oberen Abdeckung 50 angeordnet sind. Durch diese Anordnung des Kühlaggregats 60 wird erreicht, dass die Abdeckung 50 geeignet ist, die Öffnungen 61.2 des Gehäuses 61.1 des Verdampfers 61 gegen Seitenwinde abzuschirmen, welche radial zur Längsachse LA der zentralen Stütze 5 des Kondensationsbrunnens 1 gerichtet sind und geeignet wären, einen vom Kühlaggregat 60 erzeugten Luftstrom GL aus gekühlter Umgebungsluft unmittelbar an den Öffnungen 61.2 des Gehäuses 61.1 des Verdampfers 61 zu stören. Dementsprechend kann sich ein vom Kühlaggregats 60 erzeugter Luftstrom GL aus gekühlter Umgebungsluft unterhalb der oberen Abdeckung 50 zumindest bis zum äusseren Rand 50.1 der Abdeckung 50 im Wesentlichen ungestört ausbilden und über eine relativ grosse Distanz entlang der Längsachse LA der zentralen Stütze 5 propagieren.

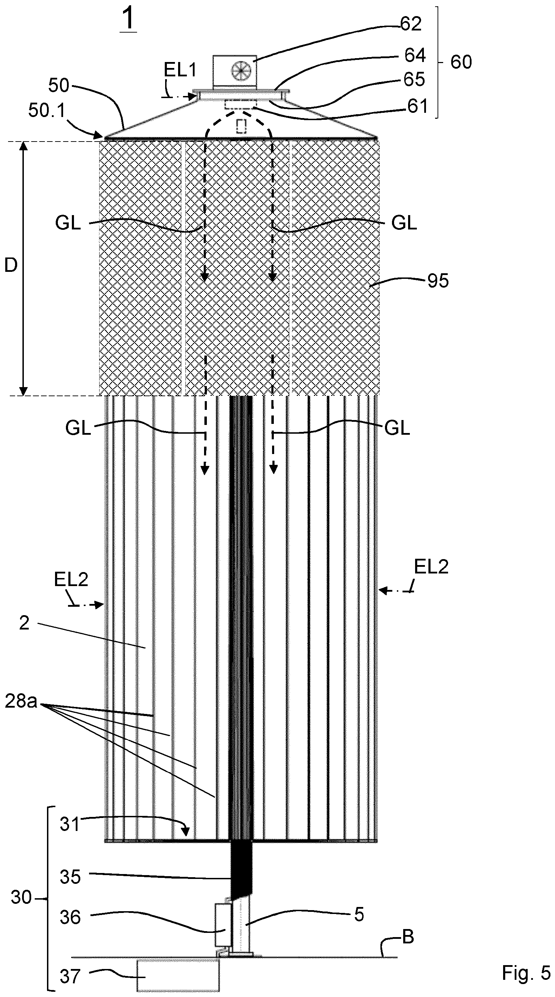

Eine weitere (optionale) Massnahme zur Optimierung des kühlenden Effekts des vom Kühlaggregats 60 erzeugten Luftstroms GL aus gekühlter Umgebungsluft ist in Fig. 5 dargestellt. Die Fig. 5 zeigt den Kondensationsbrunnens 1 gemäss Fig. 1-4 in einer Variante, in welcher ein radial zur Längsachse LA der zentralen Stütze 5 gerichteter Luft-Zustrom EL2 aus ungekühlter Umgebungsluft zumindest bereichsweise an der Peripherie des Kondensationsbrunnens 1 in einem Bereich unterhalb der Abdeckung 50 reduziert ist.

Zu diesem Zweck umfasst der Kondensationsbrunnen 1 gemäss Fig. 5 eine Anordnung einer flächigen Struktur 95, welche luftundurchlässig oder partiell luftdurchlässig ausgebildet sein kann. Die flächige Struktur 95 kann beispielsweise als (luftundurchlässiges) Flächengebilde ohne luftdurchlässige Öffnungen (z.B. als Kunststofffolie) oder als ein Flächengebilde, welches räumlich verteilt angeordnete durchgehende Öffnungen aufweist, ausgebildet sein. Die flächige Struktur 95 ist im vorliegenden Beispiel an der Peripherie des Kondensationsbrunnens 1 derart angebracht, dass sich die flächige Struktur 95 unterhalb des äusseren Randes 50.1 der Abdeckung 50 einerseits in Richtung der Längsachse LA der zentralen Stütze 5 über eine Distanz D erstreckt, welche kleiner oder gleich der Erstreckung der Netzstrukturen 2 in Richtung der Längsachse LA der zentralen Stütze 5 ist, und andererseits - mit Bezug auf eine Querschnittsfläche senkrecht zur Längsachse LA der zentralen Stütze 5 - sich längs einer geschlossenen Umfangslinie erstreckt, welche alle Netzstrukturen 2 umschliesst. In der Darstellung gemäss Fig. 5 erstreckt sich die flächige Struktur 95 derart, dass die Distanz D ungefähr 35% der Erstreckung der Netzstrukturen 2 in Richtung der Längsachse LA der zentralen Stütze 5 beträgt. Aufgrund der Anordnung der flächigen Struktur 95 ist der radial zur Längsachse LA der zentralen Stütze 5 gerichtete Luft-Zustrom EL2 aus ungekühlter Umgebungsluft im Bereich der flächigen Struktur 95 geringer als in einem Bereich unterhalb der flächigen Struktur 95. Die Distanz D kann variiert werden, um die Temperatur der Luft in dem sich unterhalb der oberen Abdeckung 50 entlang der Längsachse LA der zentralen Stütze 5 erstreckenden Raumbereich zu beeinflussen und die Menge des an den Netzstrukturen 2 kondensierten Wassers zu maximieren.

Mit Bezug auf Fig. 4, 6 und 7 wird im Folgenden eine Realisierung des Kondensationsbrunnens 1 in einer modularen Bauweise erläutert, welche insbesondere die zentrale Stütze 5, die oberen Halteelemente 11 der oberen Haltestruktur 10 und/oder die unteren Halteelemente 21 der unteren Haltestruktur 20 betrifft.

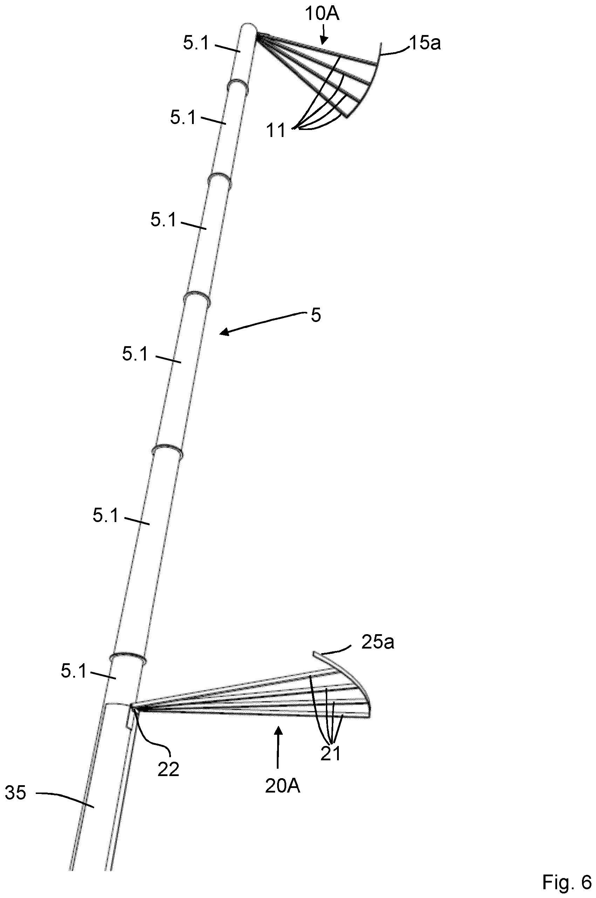

Wie in Fig. 4 und 6 angedeutet, weist die zentrale Stütze 5 mehre Längsabschnitte 5.1 auf, welche sich jeweils entlang der entlang der Längsachse LA der zentralen Stütze 5 erstrecken. Die zentrale Stütze 5 ist im vorliegenden Beispiel insbesondere als "Teleskoprohr" realisiert, wobei die Längsabschnitte 5.1 jeweils als Rohrabschnitte eines "Teleskoprohrs" ausgebildet sind und dementsprechend mindestens eines der Längsabschnitte 5.1 zumindest über einen Teil seiner Länge in Richtung der Längsachse LA der zentralen Stütze 5 in einen anderen der Längsabschnitte 5.1 schiebbar ist. Die Längsabschnitte 5.1 der zentralen Stütze 5 können derart konzipiert sein, dass die Längsabschnitte 5.1 relativ zueinander in Richtung der Längsachse LA der zentralen Stütze 5 verschiebbar sind und somit die Erstreckung der zentralen Stütze 5 entlang der Längsachse der zentralen Stütze variierbar ist. Auf diese Weise kann die Länge der zentralen Stütze 5 - abhängig vom jeweiligen Bedarf - geeignet verändert werden.

Wie in Fig. 6 angedeutet, kann die obere Haltestruktur 10 aus mehreren oberen Haltestruktur-Modulen 10A gebildet sein, welche jeweils mehrere der oberen Haltelemente 11 und einen Abschnitt 15a des sich ringförmig um die Längsachse LA der zentralen Stütze 5 erstreckenden Profils 15 umfassen. Die oberen Haltestruktur-Module 10A können an der zentralen Stütze 5 nebeneinander angeordnet und miteinander verbunden werden und ausserdem jeweils einzeln an der zentralen Stütze 5 befestigt werden. In der Darstellung gemäss Fig. 6 ist die zentrale Stütze 5 zusammen mit einem an der zentralen Stütze 5 befestigten oberen Haltestruktur-Module 10A gezeigt, wobei das obere Haltestruktur-Module 10A im vorliegenden Beispiel vier nebeneinander angeordnete obere Haltelemente 11 umfasst. Dieser Darstellung liegt die Annahme zugrunde, dass die obere Haltestruktur 10 eine Anzahl von insgesamt 36 der oberen Haltelemente 11 umfasst und dementsprechend die Haltestruktur 10 aus insgesamt neun der vorstehend genannten oberen Haltestruktur-Module 10A zusammengesetzt werden kann.

Wie in Fig. 6 angedeutet, kann die untere Haltestruktur 20 aus mehreren unteren Haltestruktur-Modulen 20A gebildet sein, welche jeweils mehrere der unteren Haltelemente 21 und einen Abschnitt 25a des sich ringförmig um die Längsachse LA der zentralen Stütze 5 erstreckenden Profils 25 umfassen. Die unteren Haltestruktur-Module 20A können an der zentralen Stütze 5 nebeneinander angeordnet und miteinander verbunden werden und ausserdem jeweils einzeln an der zentralen Stütze 5 befestigt werden. In der Darstellung gemäss Fig. 6 ist die zentrale Stütze 5 zusammen mit einem an der zentralen Stütze 5 befestigten unteren Haltestruktur-Module 20A gezeigt, wobei das untere Haltestruktur-Module 20A im vorliegenden Beispiel vier nebeneinander angeordnete untere Haltelemente 21 umfasst. Dieser Darstellung liegt die Annahme zugrunde, dass die untere Haltestruktur 20 eine Anzahl von insgesamt 36 der unteren Haltelemente 21 umfasst und dementsprechend die untere Haltestruktur 20 aus insgesamt neun der vorstehend genannten unteren Haltestruktur-Module 20A zusammengesetzt werden kann.

Die Fig. 7 zeigt das in der Fig. 6 dargestellte untere Haltestruktur-Modul 20A in einer Draufsicht entlang der Längsachse LA der zentralen Stütze 5. Das untere Haltestruktur-Modul 20A umfasst eine Basisstruktur 22 in Form eines sich radial zur Längsachse LA der zentralen Stütze 5 erstreckenden Körpers, welcher dazu bestimmt ist, an der zentralen Stütze 5 befestigt zu werden. Die vier unteren Haltelemente 21 des unteren Haltestruktur-Moduls 20A sind jeweils mit einem ihrer Enden an der Basisstruktur 22 befestigt. Jedes der vier unteren Haltelemente 21 weist auf einer Seite eine sich in der Längsrichtung des jeweiligen unteren Haltelements 21 erstreckende Rille 23 auf, welche dazu dient, das an einer der Netzstrukturen 2 kondensierte Wasser aufzunehmen und in der Längsrichtung des jeweiligen unteren Haltelements 21 zur Basisstruktur 22 abfliessen zu lassen. Wie in Fig. 7 ersichtlich, sind an der Basisstruktur 22 eine oder mehrere Abflusskanäle 23a ausgebildet, welche dazu bestimmt sind, eine Fluidverbindung zur Aufnahmeschale 35 bereitzustellen, über welche Fluidverbindung das von den Rillen 23 aufgenommene kondensierte Wasser in die Aufnahmeschale 35 fliessen kann.

Mit Bezug auf Fig. 8A und 8B wird im Folgenden eine spezielle Realisierung des Kondensationsbrunnens 1 gemäss Fig. 1-4 erläutert, bei welcher eine oder mehrere der Netzstrukturen 2 flexibel sind und hinsichtlich ihrer Anordnung mit Bezug auf die zentrale Stütze 5 derart veränderbar angeordnet sind, dass die Erstreckung jeder dieser Netzstrukturen 2 radial zur Längsachse LA der zentralen Stütze 2 variierbar ist.

Die Fig. 8A und 8B zeigen eine Darstellung einer dieser Netzstrukturen 2 in zwei verschiedenen Anordnungen jeweils in einer Draufsicht auf die dargestellte Netzstruktur 2. Analog zu der Anordnung der Netzstrukturen 2 des Kondensationsbrunnens 1 gemäss Fig. 1-4 ist die in den Fig. 8A und 8B dargestellte Netzstruktur 2 an einem oberen Haltelement 11 der oberen Haltestruktur 10 und an einem unteren Halteelement 21 der unteren Haltestruktur 20 derart befestigt, dass sich die Netzstruktur 2 entlang der Längsachse LA der zentralen Stütze 5 und radial zur Längsachse LA der zentralen Stütze 5 (bzw. in Richtung der Längsachse des in Fig. 8A und 8B dargestellten oberen Haltelements 11 und in Richtung der Längsachse des in Fig. 8A und 8B dargestellten unteren Haltelements 21) erstreckt.

Analog zur Darstellung des Kondensationsbrunnens 1 gemäss Fig. 1-4 sind im Falle der Darstellung gemäss Fig. 8A und 8B zwei Seile 28a und 28b zwischen dem oberen Halteelement 11 und dem unteren Halteelemente 21 gespannt und mit Bezug auf die Längsachse LA der zentralen Stütze 5 derart angeordnet, dass das Seil 28a mit Bezug auf die Längsachse LA der zentralen Stütze 5 "radial aussenliegend" angeordnet ist und das Seil 28b mit Bezug auf die Längsachse LA der zentralen Stütze 5 "radial innenliegend" angeordnet ist. Ebenfalls analog zur Darstellung des Kondensationsbrunnens 1 gemäss Fig. 1-4 ist im Falle der Darstellung gemäss Fig. 8A und 8B die Netzstruktur 2, welche zwischen dem oberen Halteelemente 11 und dem unteren Halteelemente 21 gehalten ist, mit den beiden Seilen 28a und 28b derart verbunden, dass der äussere Rand 2a der Netzstruktur 2 an dem Seil 28a und der äussere Rand 2b der Netzstruktur 2 an dem Seil 28b befestigt ist.

Im Falle der Darstellung gemäss Fig. 8A und 8B sind das Seil 28a und die Netzstruktur 2 am oberen Halteelement 11 derart befestigt, dass das am oberen Halteelement 11 befestigte Ende des Seils 28a zusammen mit einem Abschnitt des an diesem Ende des Seils 28a befestigten äusseren Rands 2a der Netzstruktur 2 entlang der Längsachse des oberen Halteelements 11 relativ zum Seil 28b bzw. zum äusseren Rand 2b der Netzstruktur 2 bewegbar sind. Entsprechend sind im Falle der Darstellung gemäss Fig. 8A und 8B das Seil 28a und die Netzstruktur 2 am unteren Halteelement 21 derart befestigt, dass das am unteren Halteelement 21 befestigte Ende des Seils 28a zusammen mit einem Abschnitt des an diesem Ende des Seils 28a befestigten äusseren Rands 2a der Netzstruktur 2 entlang der Längsachse des unteren Halteelements 21 relativ zum Seil 28b bzw. zum äusseren Rand 2b der Netzstruktur 2 bewegbar sind.

Des Weiteren ist im Falle der Darstellung gemäss Fig. 8A und 8B die Netzstruktur 2 am oberen Halteelement 11 derart angeordnet, dass einer oder mehrere Abschnitte der Netzstruktur 2 im Bereich zwischen dem äusseren Rand 2a der Netzstruktur 2 und dem äusseren Rand 2b der Netzstruktur 2 am oberen Halteelement 11 mit konventionelle Mitteln derart befestigt sind, dass jeder dieser am oberen Halteelement 11 befestigten Abschnitte der Netzstruktur 2 entlang der Längsachse des oberen Halteelements 11 bewegbar ist. Entsprechend ist im Falle der Darstellung gemäss Fig. 8A und 8B die Netzstruktur 2 am unteren Halteelement 21 derart angeordnet, dass einer oder mehrere Abschnitte der Netzstruktur 2 im Bereich zwischen dem äusseren Rand 2a der Netzstruktur 2 und dem äusseren Rand 2b der Netzstruktur 2 am unteren Halteelement 21 mit konventionelle Mitteln derart befestigt sind, dass jeder dieser am unteren Halteelement 21 befestigten Abschnitte der Netzstruktur 2 entlang der Längsachse des unteren Halteelements 21 bewegbar ist.

Wie aus Fig. 8A und 8B ersichtlich, ist in der Darstellung gemäss Fig. 8B im Vergleich zur Darstellung gemäss Fig. 8A die Anordnung der Netzstruktur 2 derart verändert, dass das Seil 28a zusammen mit dem am Seil 28a befestigten äusseren Rand 2a der Netzstruktur 2 radial zur Längsachse LA der zentralen Stütze 5 verschoben ist und dabei der Abstand des äusseren Rands 2a der Netzstruktur 2 relativ zum äusseren Rands 2b der Netzstruktur 2 im Vergleich zur Darstellung gemäss Fig. 8A reduziert ist. Die Netzstruktur 2 ist im Falle der Darstellung gemäss Fig. 8A derart zwischen dem oberen Halteelement 11 und dem unteren Halteelemente 21 gehalten, dass sich die Netzstruktur 2 in einem Querschnitt senkrecht zur Längsachse LA der zentralen Achse 5 linear entlang einer radial zur Längsachse LA der zentralen Stütze 5 angeordneten Geraden erstreckt. Im Falle der Darstellung gemäss Fig. 8B ist die Netzstruktur 2 hingegen derart angeordnet, dass die Netzstruktur 2 sich in einem Querschnitt senkrecht zur Längsachse LA der zentralen Achse 5 nicht linear entlang einer radial zur Längsachse LA der zentralen Stütze 5 angeordneten Geraden erstreckt, sondern eine oder mehrere Faltungen aufweist.

Wie in Fig. 8A und 8B angedeutet, ist im vorliegenden Beispiel vorgesehen, dass das Seil 28a zusammen mit dem am Seil 28a befestigten äusseren Rand 2a der Netzstruktur 2 mithilfe des in Fig. 1, 2 und 4 dargestellten Elektromotors 70 radial zur Längsachse LA der zentralen Stütze 5 bewegt werden können.

Der Elektromotor 70 ist im vorliegenden Beispiel dazu vorgesehen, eine in Fig. 8A und 8B dargestellte drehbare Welle 81 anzutreiben, welche an der zentralen Stütze 5 befestigt ist und sich parallel zur Längsachse LA der zentralen Stütze 5 erstreckt. Die drehbare Welle 81 ist an der zentralen Stütze 5 derart gelagert, dass die drehbare Welle 81 um ihre Längsachse drehbar ist. Wie in Fig. 8A und 8B angedeutet, ist die drehbare Welle 81 mittels eines Kopplungselements 82 (z.B. einem Riemen) an die Antriebswelle 71 des Elektromotors 70 gekoppelt, sodass die drehbare Welle 81 mittels des Elektromotors 70 in eine Rotation um ihre Längsachse versetzt werden kann.

Um zu erreichen, dass das Seil 28a zusammen mit dem am Seil 28a befestigten äusseren Rand 2a der Netzstruktur 2 radial zur Längsachse LA der zentralen Stütze 5 bewegt werden können, ist das am oberen Halteelement 11 befestigte Ende des Seils 28a über einen konventionell ausgebildeten, am oberen Halteelement 11 angeordneten Bewegungsmechanismus, welcher in den Fig. 8A und 8B nicht im Detail erkennbar ist, derart an die drehbare Welle 81 gekoppelt, dass das am obere Halteelement 11 befestigte Ende des Seils 28a bei einer Drehung der drehbaren Welle 81 um deren Längsachse in Richtung der Längsachse des oberen Halteelement 11 bewegt wird. Auf eine analoge weise ist ebenfalls das am unteren Halteelement 21 befestigte Ende des Seils 28a über einen konventionell ausgebildeten, am unteren Halteelement 21 angeordneten Bewegungsmechanismus, welcher in den Fig. 8A und 8B nicht im Detail erkennbar ist, derart an die drehbare Welle 81 gekoppelt, dass das am unteren Halteelement 21 befestigte Ende des Seils 28a bei einer Drehung der drehbaren Welle 81 um deren Längsachse in Richtung der Längsachse des unteren Halteelements 21 bewegt wird.

Auf die vorstehend genannte Weise ist das Seil 28a derart an die drehbare Welle 81 gekoppelt, dass bei einer Drehung der drehbaren Welle 81 um ihre Längsachse das am oberen Halteelement 11 befestigte Ende des Seils 28a und das am unteren Halteelement 21 befestigte Ende des Seils 28a synchron miteinander radial zur Längsachse LA der zentralen Stütze 5 jeweils in dieselbe Richtung bewegbar sind.

Es sei darauf hingewiesen, dass an die in Fig. 8A und 8B dargestellte drehbare Welle 81 - zusätzlich zu der in Fig. 8A und 8B dargestellte Netzstruktur 2 - auf eine analoge Weise noch eine oder mehrere weitere Netzstrukturen 2 gekoppelt werden können, um zusätzlich mittels der drehbaren Welle 81 die Erstreckung dieser einen oder mehreren weiteren Netzstrukturen 2 radial zur Längsachse LA der zentralen Stütze 5 variieren zu können. Wie in Fig. 4 angedeutet, kann der Kondensationsbrunnen 1 auch eine Anordnung einer Mehrzahl der drehbaren Welle 81 aufweisen, wobei alle drehbaren Wellen 81 an den Elektromotor 70 gekoppelt werden können, um alle drehbaren Wellen 81 mittels des Elektromotors 70 synchron anzutreiben. Eine Anordnung einer Mehrzahl der drehbaren Welle 81 bietet die Möglichkeit, die Anordnung aller Netzstrukturen 2 des Kondensationsbrunnens 1 derart zu ändern, dass die Erstreckung aller Netzstrukturen 2 radial zur Längsachse LA der zentralen Stütze 5 synchron veränderbar ist.

Hinsichtlich Fig. 1-8 sei darauf hingewiesen, dass eine elektrische Energieversorgungsvorrichtung, welche zur Versorgung des Elektromotors 70 und/oder des Kühlaggregats 60 des Kondensationsbrunnens 1 mit elektrischer Energie benötigt wird, in den Fig. 1-8 nicht dargestellt ist. Eine entsprechende Energieversorgungsvorrichtung kann beispielsweise separat von der zentralen Stütze 5 in einer Distanz zur zentralen Stütze 5 angeordnet sein und beispielsweise eine Photovoltaikeinrichtung und/oder eine Windkraftanlage umfassen.

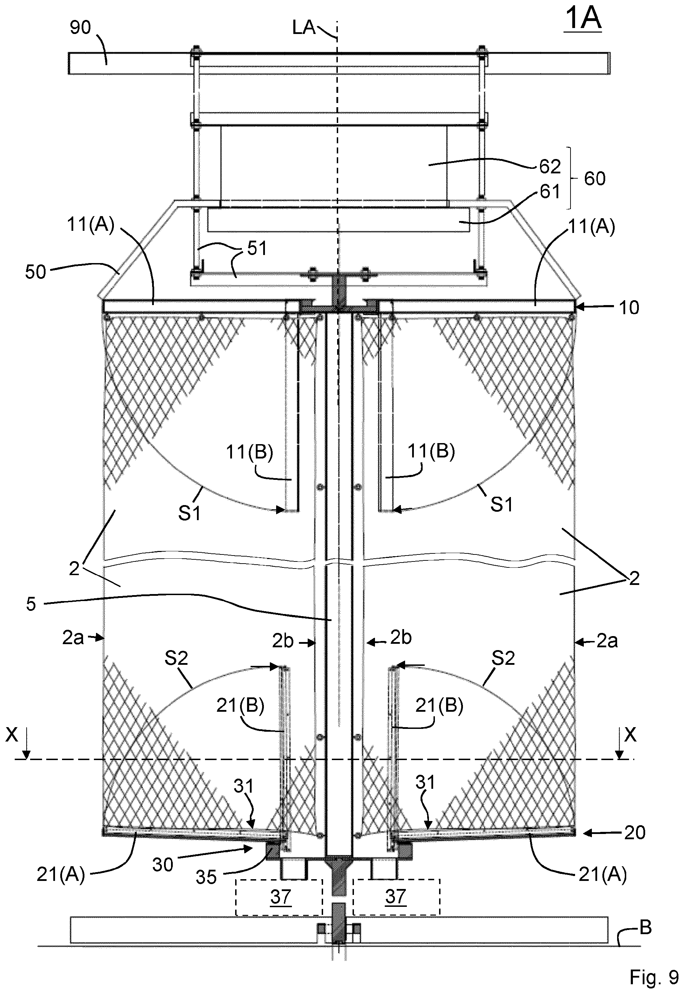

Die Fig. 9-10 zeigt einen gemäss einer zweiten Ausführungsform ausgebildeten erfindungsgemässen Kondensationsbrunnen 1A zum Kondensieren von Wasser aus Umgebungsluft aus verschiedenen Perspektiven.

Der Kondensationsbrunnen 1A ist insofern ähnlich wie der in Fig. 1-4 dargestellte Kondensationsbrunnen 1, als der Kondensationsbrunnen 1A ebenfalls mehrere Netzstrukturen 2 und eine zentrale Stütze 5 zum Tragen der Netzstrukturen 2 umfasst, wobei jede der Netzstrukturen 2 an einer an der zentralen Stütze 5 angeordneten oberen Haltestruktur 10 zum Halten der Netzstrukturen angeordnet ist, sodass sich jede der Netzstrukturen 2 unterhalb der oberen Haltestruktur 10 radial zu einer Längsachse LA der zentralen Stütze 5 und entlang der Längsachse LA der zentralen Stütze 5 erstreckt. Ausserdem umfasst der Kondensationsbrunnen 1A ebenfalls eine Sammeleinrichtung 30 mit mindestens einer Aufnahmefläche 31 für kondensiertes Wasser, welche sich unterhalb der Netzstrukturen 2 derart erstreckt, dass kondensiertes Wasser von mindestens einer der Netzstrukturen 2 auf die Aufnahmefläche 31 leitbar ist.

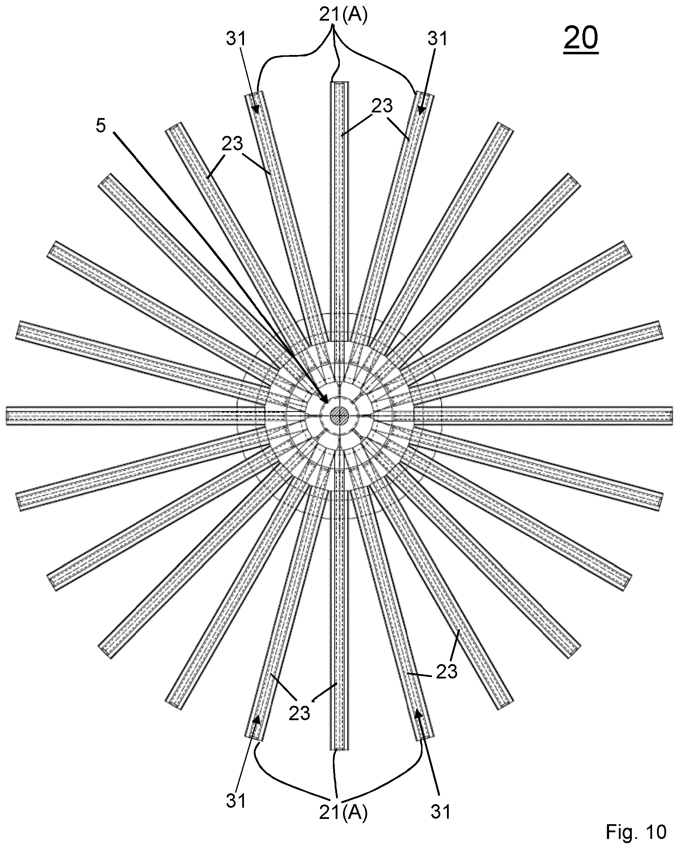

Wie aus Fig. 10 ersichtlich, umfasst der Kondensationsbrunnen 1A im vorliegenden Beispiel eine Anzahl von vierundzwanzig Netzstrukturen 2. Der Kondensationsbrunnen 1A kann jedoch auch mit einer anderen Anzahl Netzstrukturen 2 ausgestattet sein.

Analog zur Konstruktion des Kondensationsbrunnen 1 umfasst die obere Haltestruktur 10 des Kondensationsbrunnens 1A im vorliegenden Beispiel eine Anzahl von vierundzwanzig länglichen oberen Halteelementen 11, welche derart ausgebildet sind, dass jedes der länglichen oberen Haltelemente 11 mit einem seiner Enden an der zentralen Stütze 5 befestigt ist und jedes dieser länglichen oberen Haltelemente 11 eine Längsachse aufweist, welche radial zur Längsachse LA der zentralen Stütze 5 ausgerichtet ist oder radial zur Längsachse LA der zentralen Stütze 5 ausrichtbar ist, wobei jeweils eine der Netzstrukturen 2 an jeweils einem der mehreren länglichen oberen Halteelemente 11 derart befestigt ist, dass sich die jeweilige eine Netzstruktur 2 unterhalb des jeweiligen einen der mehreren länglichen oberen Halteelements 11 entlang der Längsachse LA der zentralen Stütze 5 erstreckt.

Analog zur Konstruktion des Kondensationsbrunnen 1 weist der Kondensationsbrunnens 1A eine untere Haltestruktur 20 auf, wobei die untere Haltestruktur 20 des Kondensationsbrunnens 1A eine Anzahl von vierundzwanzig länglichen unteren Halteelementen 21 umfasst, welche derart ausgebildet sind, dass jedes der länglichen unteren Haltelemente 21 mit einem seiner Enden an der zentralen Stütze 5 befestigt ist und jedes dieser länglichen unteren Haltelemente 21 eine Längsachse aufweist, welche radial zur Längsachse LA der zentralen Stütze 5 ausgerichtet ist oder radial zur Längsachse LA der zentralen Stütze 5 ausrichtbar ist, wobei jeweils eine der Netzstrukturen 2 an jeweils einem der mehreren länglichen unteren Halteelemente 21 derart befestigt ist, dass sich die jeweilige eine Netzstruktur 2 oberhalb des jeweiligen einen der mehreren länglichen unteren Halteelements 21 entlang der Längsachse LA der zentralen Stütze 5 erstreckt.

Der Kondensationsbrunnen 1A ist als mobiler Kondensationsbrunnen ausgelegt, welcher beispielsweise von einer einzigen Person leicht transportierbar sein soll. Dementsprechend kann die Längserstreckung der zentralen Stütze 5 in Richtung der Längsachse LA beispielsweise 2 Meter betragen.

Die Fig. 9 zeigt den Kondensationsbrunnen 1A in einem Längsschnitt entlang der Längsachse LA der zentralen Stütze 5 in einer Situation, in welcher der Kondensationsbrunnen 1A auf einem Boden B errichtet ist, sodass sich die zentrale Stütze 5 im Wesentlichen entlang einer Vertikalen relativ zum Boden B erstreckt. In der Darstellung gemäss Fig. 9 sind zwei der Netzstrukturen 2 des Kondensationsbrunnens 1A jeweils in einer Draufsicht sichtbar.

Die räumliche Erstreckung des Kondensationsbrunnen 1A radial zur zentralen Stütze 5 ist im vorliegenden Beispiel dadurch veränderbar, dass jedes der länglichen oberen Haltelemente 11 an der zentralen Stütze 5 derart befestigt ist, dass das jeweilige längliche obere Haltelement 11 mit Bezug auf die zentrale Stütze 5 schwenkbar ist. Entsprechend ist jedes der länglichen unteren Haltelemente 21 an der zentralen Stütze 5 derart befestigt ist, dass das jeweilige längliche untere Haltelement 21 mit Bezug auf die zentrale Stütze 5 schwenkbar ist.

In der Darstellung gemäss Fig. 9 ist angenommen, dass jedes obere Haltelement 11 beispielsweise in eine erste Stellung A gebracht werden kann, in welcher sich das jeweilige obere Haltelement 11 senkrecht zur zentralen Stütze 5 erstreckt, und mittels einer (in der Fig. 9 durch einen Pfeil S1 repräsentierte) Schwenkbewegung in eine zweite Stellung B gebracht werden kann, in welcher sich das jeweilige obere Haltelement 11 im Wesentlichen parallel zur zentralen Stütze 5 erstreckt. Entsprechend ist in der Darstellung gemäss Fig. 9 angenommen, dass jedes untere Haltelement 21 beispielsweise in eine erste Stellung A gebracht werden kann, in welcher sich das jeweilige untere Halteelement 21 senkrecht zur zentralen Stütze 5 erstreckt, und mittels einer (in der Fig. 9 durch einen Pfeil S2 repräsentierte) Schwenkbewegung in eine zweite Stellung B gebracht werden kann, in welcher sich das jeweilige untere Haltelement 21 im Wesentlichen parallel zur zentralen Stütze 5 erstreckt.

In der Fig. 9 ist die Anordnung jedes oberen Halteelements 11 sowohl in ersten Stellung A als auch in der zweiten Stellung B dargestellt: ein in der ersten Stellung A angeordnetes oberes Halteelement 11 ist dabei mit dem Bezugszeichen "11(A)" bezeichnet, das in der zweiten Stellung B angeordnete obere Halteelement 11 ist entsprechend mit dem Bezugszeichen "11(B)" bezeichnet.

In der Fig. 9 ist ausserdem die Anordnung jedes unteren Halteelements 21 sowohl in der ersten Stellung A als auch in der zweiten Stellung B dargestellt: ein in der ersten Stellung A angeordnetes unteres Halteelement 21 ist dabei mit dem Bezugszeichen "21(A)" bezeichnet, das in der zweiten Stellung B angeordnete untere Halteelement 11 ist entsprechend mit dem Bezugszeichen "21(B)" bezeichnet.

Wie in Fig. 9 dargestellt, kann der Kondensationsbrunnen 1A - ähnlich wie der Kondensationsbrunnen 1 gemäss Fig. 1-4 - eine obere Abdeckung 50 aufweisen, welche an der zentralen Stütze 5 oberhalb der oberen Haltestruktur 10 angeordnet ist und sich im Wesentlichen radial zur Längsachse LA der zentralen Stütze 5 erstreckt, sodass alle Netzstrukturen 2 des Kondensationsbrunnens 1A in einem Raumbereich angeordnet sind, welcher einer Projektion der oberen Abdeckung 50 axial zur Längsachse LA der zentralen Stütze 5 in Richtung der Netzstrukturen 2 entspricht.

Ähnlich wie der Kondensationsbrunnen 1 gemäss Fig. 1-4 kann der Kondensationsbrunnen 1A ein in einem zentralen Bereich der oberen Abdeckung 50 angeordnetes Kühlaggregat 60 aufweisen, welches dazu dient, Umgebungsluft aus einem Raumbereich oberhalb der oberen Abdeckung 50 aufzunehmen, auf eine Temperatur unterhalb der Taupunkttemperatur der Umgebungsluft zu kühlen und die derart gekühlte Luft in den Raumbereich unterhalb der oberen Abdeckung 50 strömen zu lassen, in welchem die Netzstrukturen 2 des Kondensationsbrunnens 1A angeordnet sind (wie in Fig. 9 angedeutet).

In der Darstellung gemäss Fig. 9 ist an der oberen Abdeckung 50 des Kondensationsbrunnens 1A eine elektrischen Energieversorgungsvorrichtung 90 angeordnet, welche dazu dient, elektrische Energie bereitzustellen, welche zur Versorgung des Kühlaggregats 60 benötigt wird. Die Energieversorgungsvorrichtung 90 kann im vorliegenden Beispiel als Photovoltaikeinrichtung konzipiert sein.

Die Fig. 10 zeigt den Kondensationsbrunnen 1A in einem Querschnitt entlang der Linie X-X in Fig. 9 in einer Situation, in welcher sich jedes untere Halteelement 21 in der vorstehend genannten ersten Stellung A befindet, sodass sich die Längsachsen aller unteren Halteelemente 21 jeweils senkrecht zur Längsachse LA der zentralen Stütze 5 erstrecken. Wie ersichtlich, weist im vorliegenden Beispiel jedes untere Halteelement 21 eine Aufnahmefläche 31 für kondensiertes Wasser auf, welche eine in dem unteren Haltelement 21 ausgebildete Rille 23 umfasst, wobei die Rille 23 sich entlang der Längsachse des unteren Haltelements 21 erstreckt, um entlang der Rille 23 einen Abfluss von kondensiertem Wasser in Richtung der zentralen Stütze 5 zu ermöglichen.

Das im Zusammenhang mit Fig. 1-10 offenbarte Kühlaggregat 60 muss nicht unbedingt als Kompressionswärmepumpe realisiert sein, sondern kann auch als eine auf anderen Prinzipien beruhende Wärmepumpe oder als eine andere zum Kühlen der Umgebungslauft geeignete Vorrichtung realisiert sein.

## Patentansprüche

1. Kondensationsbrunnen (1, 1A) zum Kondensieren von Wasser aus Umgebungsluft, welcher umfasst:
mindestens eine Netzstruktur (2) , welche eine Kondensationsfläche bildet, sodass abhängig von Temperatur und/oder Feuchtigkeit der Umgebungsluft Wasser an der mindestens einen Netzstruktur (2) kondensieren kann; und
mindestens eine Sammeleinrichtung (30) zum Sammeln des an der mindestens einen Netzstruktur (2) kondensierten Wassers,
**dadurch gekennzeichnet, dass**
der Kondensationsbrunnen (1, 1A) mehrere Netzstrukturen (2) und eine zentrale Stütze (5) zum Tragen der Netzstrukturen (2) umfasst,
wobei jede der Netzstrukturen (2) an einer an der zentralen Stütze (5) angeordneten oberen Haltestruktur (10) zum Halten der Netzstrukturen angeordnet ist, sodass sich jede der Netzstrukturen (2) unterhalb der oberen Haltestruktur (10) radial zu einer Längsachse (LA) der zentralen Stütze (5) und entlang der Längsachse (LA) der zentralen Stütze (5) erstreckt,
wobei die Sammeleinrichtung (30) mindestens eine Aufnahmefläche (31) für kondensiertes Wasser umfasst, welche Aufnahmefläche (31) sich unterhalb der Netzstrukturen (2) derart erstreckt, dass kondensiertes Wasser von mindestens einer der Netzstrukturen (2) auf die Aufnahmefläche (31) leitbar ist.

2. Kondensationsbrunnen (1, 1A) gemäss Anspruch 1, mit einem Kühlaggregat (60), welches dazu ausgebildet ist, Umgebungsluft in einem Raumbereich oberhalb der Netzstrukturen (2) auf eine Temperatur unterhalb der Taupunkttemperatur der Umgebungsluft zu kühlen.

3. Kondensationsbrunnen (1, 1A) gemäss Anspruch 2, wobei das Kühlaggregat (60) an der zentralen Stütze (5) befestigt ist.

4. Kondensationsbrunnen (1, 1A) nach einem der Ansprüche 1-3, wobei die Netzstrukturen (2) um die zentrale Stütze (5) räumlich verteilt, vorzugsweise gleichmässig räumlich verteilt, angeordnet sind.

5. Kondensationsbrunnen (1, 1A) nach einem der Ansprüche 1-4, wobei die obere Haltestruktur (10) mehrere längliche obere Halteelemente (11) umfasst, welche derart ausgebildet sind, dass jedes der länglichen oberen Haltelemente (11) mit einem seiner Enden an der zentralen Stütze (5) befestigt ist und jedes dieser länglichen oberen Haltelemente (11) eine Längsachse aufweist, welche radial zur Längsachse (LA) der zentralen Stütze (5) ausgerichtet ist oder radial zur Längsachse (LA) der zentralen Stütze (5) ausrichtbar ist,
wobei jeweils eine der Netzstrukturen (2) an jeweils einem der mehreren länglichen oberen Halteelemente (11) derart befestigt ist, dass sich die jeweilige eine Netzstruktur (2) unterhalb des jeweiligen einen der mehreren länglichen oberen Halteelements (11) entlang der Längsachse (LA) der zentralen Stütze (5) erstreckt.

6. Kondensationsbrunnen (1A) nach Anspruch 5, wobei jedes der länglichen oberen Haltelemente (11) an der zentralen Stütze (5) derart befestigt ist, dass das jeweilige längliche obere Haltelement (11) mit Bezug auf die zentrale Stütze (5) schwenkbar ist.

7. Kondensationsbrunnen (1, 1A) nach einem der Ansprüche 1-6, mit einer an der zentralen Stütze (5) angeordneten unteren Haltestruktur (20) zum Halten der Netzstrukturen (2), welche untere Haltestruktur (20) unterhalb der oberen Haltestruktur (10) in einem Abstand zur oberen Haltestruktur (10) angeordnet ist, wobei die Netzstrukturen (2) an der unteren Haltestruktur (20) befestigt sind und zwischen der oberen Haltestruktur (10) und der unteren Haltestruktur (20) derart gespannt oder derart spannbar sind, dass sich jede der Netzstrukturen (2) in einem Raumbereich zwischen der oberen Haltestruktur (10) und der unteren Haltestruktur (20) radial zu der Längsachse (LA) der zentralen Stütze (5) und entlang der Längsachse (LA) der zentralen Stütze (5) erstreckt.

8. Kondensationsbrunnen (1, 1A) nach Anspruch 7,
wobei die untere Haltestruktur (20) mehrere längliche untere Halteelemente (21) umfasst, welche derart ausgebildet sind, dass jedes der länglichen unteren Haltelemente (21) mit einem seiner Enden an der zentralen Stütze (5) befestigt ist und jedes dieser länglichen unteren Haltelemente (21) eine Längsachse aufweist, welche radial zur Längsachse (LA) der zentralen Stütze (5) ausgerichtet ist oder radial zur Längsachse (LA) der zentralen Stütze (5) ausrichtbar ist,
wobei jeweils eine der Netzstrukturen (2) an jeweils einem der mehreren länglichen unteren Halteelemente (21)) derart befestigt ist, dass sich die jeweilige eine Netzstruktur (2) oberhalb des jeweiligen einen der mehreren länglichen unteren Halteelements (21) entlang der Längsachse (LA) der zentralen Stütze (5) erstreckt.

9. Kondensationsbrunnen (1A) nach Anspruch 8, wobei jedes der länglichen unteren Haltelemente (21) an der zentralen Stütze (5) derart befestigt ist, dass das jeweilige längliche untere Haltelement (21) mit Bezug auf die zentrale Stütze (5) schwenkbar ist.

10. Kondensationsbrunnen (1, 1A) nach einem der Ansprüche 8 oder 9, wobei die mindestens eine Aufnahmefläche (31) für kondensiertes Wasser eine in einem der länglichen unteren Haltelemente (21) ausgebildete Rille (23) umfasst, welche Rille (23) sich entlang der Längsachse des einen der länglichen unteren Haltelemente (21) erstreckt, um entlang der Rille (23) einen Abfluss von kondensiertem Wasser in Richtung der zentralen Stütze (5) zu ermöglichen.

11. Kondensationsbrunnen (1, 1A) nach einem der Ansprüche 1-10, wobei die zentrale Stütze (5) mehre Längsabschnitte (5.1) aufweist, welche Längsabschnitte (5.1) relativ zueinander in Richtung der Längsachse (LA) der zentralen Stütze (5) verschiebbar sind, sodass die Erstreckung der zentralen Stütze (5) entlang der Längsachse der zentralen Stütze variierbar ist.

12. Kondensationsbrunnen (1, 1A) nach einem der Ansprüche 1-11, wobei die zentrale Stütze (5) als Teleskoprohr ausgebildet ist, welches Teleskoprohr mehrere sich entlang der Längsachse (LA) der zentralen Stütze erstreckende Rohrabschnitte (5.1) umfasst, wobei mindestens einer der Rohrabschnitte (5.1) zumindest über einen Teil seiner Länge in Richtung der Längsachse (LA) der zentralen Stütze (5) in einen anderen der Rohrabschnitte (5.1) schiebbar ist.

13. Kondensationsbrunnen (1, 1A) nach einem der Ansprüche 1-12, wobei mindestens eine der Netzstrukturen (2) derart ausgebildet ist, dass die mindestens eine Netzstruktur (2) flexibel ist und ein Abschnitt (2a) der mindestens einen Netzstruktur (2) radial zur Längsachse (LA) der zentralen Stütze (5) bewegbar ist, sodass eine Erstreckung der mindestens einen der Netzstrukturen (2) radial zur Längsachse (LA) der zentralen Stütze (2) variierbar ist.

14. Kondensationsbrunnen (1, 1A) nach Anspruch 13, mit einem Elektromotor (70), welcher dazu ausgebildet ist, den Abschnitt (2a) der mindestens einen Netzstruktur (2) radial zur Längsachse (LA) der zentralen Stütze (5) zu bewegen.

15. Kondensationsbrunnen (1, 1A) nach einem der Ansprüche 2 oder 3, wobei das Kühlaggregat (60) mit elektrischer Energie betreibbar ist und eine elektrische Energieversorgungsvorrichtung (90) vorhanden ist, welche ausgebildet ist, das Kühlaggregat (60) mit elektrischer Energie zu versorgen.

16. Kondensationsbrunnen (1, 1A) nach Anspruch 14, mit einer elektrischen Energieversorgungsvorrichtung (90), welche ausgebildet ist, den Elektromotor (70) mit elektrischer Energie zu versorgen.

17. Kondensationsbrunnen (1, 1A) nach einem der Ansprüche 15 oder 16, wobei die elektrischen Energieversorgungsvorrichtung (90) zur Bereitstellung der elektrischen Energie umfasst: mindestens eine Photovoltaikeinrichtung zur Umwandlung von Sonnenenergie in elektrische Energie und/oder eine Windkraftanlage zur Erzeugung von elektrischer Energie.
